# EUROPÄISCHE PATENTSCHRIFT

(11) **EP 1 869 347 B1**
(45) Veröffentlichungstag und Bekanntmachung des Hinweises auf die Patenterteilung: **30.09.2009**
(21) Anmeldenummer: 06723470.8
(22) Anmeldetag: 16.03.2006
(51) Int. Cl.: F16H 61/14

(54) **HYDRAULISCHES STEUERSYSTEM FÜR EINEN HYDRODYNAMISCHEN DREHMOMENTWANDLER MIT EINER GEREGELTEN WANDLERÜBERBRÜCKUNGSKUPPLUNG**
HYDRAULIC CONTROL SYSTEM FOR A HYDRODYNAMIC TORQUE CONVERTER COMPRISING A CONTROLLED TORQUE CONVERTER LOCKUP CLUTCH
SYSTEME DE COMMANDE HYDRAULIQUE POUR CONVERTISSEUR DE COUPLE HYDRODYNAMIQUE A EMBRAYAGE DE PONTAGE ASSERVI

(30) Priorität: 11.04.2005 DE 102005016495
(43) Veröffentlichungstag der Anmeldung: 26.12.2007
(73) Patentinhaber: ZF Friedrichshafen AG, 88038 Friedrichshafen (DE)
(72) Erfinder: GIERER, Georg, 88079 Kressbronn (DE); SCHMIDT, Thilo, 88074 Meckenbeuren (DE); ROLSER, Tobias, 88276 Berg (DE)
(86) Internationale Anmeldenummer: PCT/EP2006/002422
(87) Internationale Veröffentlichungsnummer: WO 2006/108484

(56) Entgegenhaltungen:
- DE-A1- 3 937 976
- US-A- 4 640 396
- US-A- 5 549 184

## Beschreibung

Die Erfindung betrifft ein hydraulisches Steuersystem für einen hydrodynamischen Drehmomentwandler mit einer geregelten Wandlerüberbrückungskupplung eines Automatgetriebes gemäß der im Oberbegriff des Patentanspruches 1 näher definierten Art. Ein derartiges Steuersystem ist aus dem Dokument DE 3 937 969 bekannt.

Aus der Praxis ist es hinlänglich bekannt, Antriebsstränge von Fahrzeugen mit als hydrodynamische Drehmomentwandler ausgeführten Anfahretementen auszubilden. Dabei werden in den meisten Fällen so genannte Zweileitungswandler verwendet, die jeweils mit einer integrierten Wandlerüberbrückungskupplung ausgerüstet sind. Die Wandlerüberbrückungskupplungen sind zur Reduzierung bzw. zur Eliminierung der hydraulischen Verluste der hydrodynamischen Drehmomentwandler vorgesehen.

Im Allgemeinen ist ein zur Betätigung der Wandlerüberbrückungskupplung vorgesehener und mit hydraulischem Druck beaufschlagbarer Wandlerkupplungskolben in einem Zweileitungswandler als flexibler Teller ausgebildet, dessen Nabe drehfest mit einer Turbine des hydrodynamischen Drehmomentwandlers verbunden ist.

Bei geöffneter Wandlerüberbrückungskupplung wird der Wandlerkupplungskolben von einer von einer Zulaufseite des hydrodynamischen Drehmomentwandlers ausgehenden Ölströmung, die in Richtung einer Rücklaufseite des hydrodynamischen Drehmomentwandlers strömt, beaufschlagt bzw. von dieser überströmt. Zum Schließen der Wandlerüberbrückungskupplung wird ein Zulaufdruck des hydrodynamischen Drehmomentwandlers im Wesentlichen auf Null reduziert bzw. geschaltet, so dass ein im hydrodynamischen Drehmomentwandler vorliegender statischer Gesamtdruck ebenfalls im Wesentlichen auf Null abfällt. Der in Schließrichtung der Wandlerüberbrückungskupplung angefederte Wandlerkupplungskolben, der auf einer dem hydrodynamischen Drehmomentwandler abgewandten Seite mit einem Reibbelag beschichtet ist, wird bei dem letztgenannten Betriebszustand des hydrodynamischen Drehmomentwandlers durch die Federeinrichtung des Wandlerkupplungskolbens gegen das Gehäuse der Pumpenseite des hydrodynamischen Drehmomentwandlers gedrückt.

Um die Übertragungsfähigkeit der Wandlerüberbrückungskupplung und damit auch das über die Wandlerüberbrückungskupplung führbare Drehmoment zu erhöhen, wird ein Zulaufdruck der Wandlerüberbrückungskupplung angehoben. Die Erhöhung des Zulaufdrucks der Wandlerüberbrückungskupplung erhöht die Anpressung des Wandlerkupplungskolbens gegen das Gehäuse der Pumpenseite des hydrodynamischen Drehmomentwandlers. Zudem verhindert der Wandlerkupplungskolben bei geschlossener Wandlerüberbrückungskupplung die Ölströmung durch den hydrodynamischen Drehmomentwandler, so dass dem Wandlerkupplungskolben der Wandlerüberbrückcungskupplung im Wesentlichen die Funktionalität eines herkömmlichen hydraulischen Rückschlagventils zugrunde liegt.

Um eine Beeinträchtigung eines Fahrkomforts zu vermeiden, wird die Wandlerüberbrückungskupplung vorzugsweise lediglich in solchen Betriebszuständen des Antriebsstranges geschlossen, während welchen aus Drehungleichförmigkeiten einer Brennkraftmaschine des Antriebsstranges resultierende und akustisch von einem Fahrer wahrnehmbare Anregungen im Fahrzeug unterbleiben. Im Gegensatz hierzu steht jedoch das Bestreben, die Wandlerüberbrückungskupplung zur Reduzierung der bei geöffneter Wandlerüberbrückungskupplung im hydrodynamischen Drehmomentwandler auftretenden hydraulischen Verlustleistung während eines Anfahrvorganges möglichst rasch zu schließen.

Dies führt u. a. dazu, dass die Wandlerüberbrückungskupplung auch bei hohen Differenzdrehzahlen im hydrodynamischen Drehmomentwandler zwischen einem Turbinenrad und einem Pumpenrad des Drehmomentwandlers geschlossen werden muss.

Je nach Auslegung eines hydrodynamischen Drehmomentwandlers treten bei hohen Differenzdrehzahlen im hydrodynamischen Drehmomentwandler hydrodynamische Effekte auf, die sich auf einen Schließvorgang der Wandlerüberbrückungskupplung unter Umständen derart negativ auswirken, dass die Wandlerüberbrückungskupplung nicht in einer vorgesehenen Form geschlossen werden kann oder überhaupt nicht geschlossen wird. Dies führt u. a. dazu, dass der Zulaufdruck des hydrodynamischen Drehmomentwandlers nicht in der vorgesehenen Art und Weise auf Null abfällt, sondern in Abhängigkeit der Drehzahldifferenz zwischen dem Turbinenrad und dem Pumpenrad größer oder sogar kleiner als der Zulaufdruck der Wandlerüberbrückungskupplung ist Da die Zulaufseite des hydrodynamischen Drehmomentwandlers bei geschlossener Wandlerüberbrückungskupplung durch den Wandlerkupplungskolben vom Drehmomentwandler getrennt ist, treten die hydrodynamischen Effekte im Vergleich zu der Zulaufseite der Wandlerüberbrückungskupplung in erheblich geringerem Umfang auf.

Am Wandlerkupplungskolben greifen jeweils in Abhängigkeit des aktuellen Betriebszustandes stehende Gesamtkraftkomponenten an. So besteht bei einem Betriebszustand des hydrodynamischen Drehmomentwandlers, zu dem der Zulaufduck des Drehmomentwandlers kleiner ist als der Zulaufdruck der Wandlerüberbrückungskupplung, nachteilhafterweise die Möglichkeit, dass die Wandlerüberbrückungskupplung vor einem vorgesehenen Schließzeitpunkt plötzlich schließt, was als so genanntes Zuschnappen der Wandlerüberbrückungskupplung bezeichnet wird. Des Weiteren besteht jedoch auch die Möglichkeit, dass aufgrund der aktuell an dem Wandlerkupplungskolben angreifenden Gesamtkraftkomponente die Wandlerüberbrückungskupplung nicht geschlossen wird, wobei letztgenannte Fehlansteuerung der Wandlerüberbrückungskupplung problematischer ist, da diese Fehlansteuerung vorwiegend während eines Schließvorganges der Wandlerüberbrückungskupplung bei höheren Drehzahlen des Pumpenrades auftritt.

Ein unerwünschter hydrodynamischer Effekt, der zu einer Fehlansteuerung der Wandlerüberbrückungskupplung führt, ist eine so genannte unechte Kavitation, welche bei Unterschreiten eines temperaturabhängigen Druckniveaus im hydrodynamischen Drehmomentwandler auftritt. Dabei geht die vor Unterschreiten des Druckniveaus im durch den hydrodynamischen Drehmomentwandler geführten Hydraulikfluid gelöste Luft in den gasförmigen Zustand über, was nachteilhafterweise zu Luftansammlungen im Drehmomentwandler und auch auf der Zulaufseite der Wandlerüberbrückungskupplung führt.

Dabei wird das vorgenannte Druckniveau im Drehmomentwandler dadurch unterschritten, dass der Zulaufdruck des Drehmomentwandlers zum Schließen der Wandlerüberbrückungskupplung stetig bis auf Null abgesenkt wird. Anschließend wird der Zulaufdruck der Wandlerüberbrückungskupplung zum Einstellen der Übertragungsfähigkeit der Wandlerüberbrückungskupplung auf einen vorgesehenen Druckwert angehoben. Somit ist der statische Druck im Drehmomentwandler im Zeitraum zwischen dem Zeitpunkt, zu dem der Zulaufdruck des Drehmomentwandlers ein Druckniveau unterschreitet, unterhalb dem die im Hydraulikfluid gelöste Luft ausgast, und dem Zeitpunkt, zu dem der Zulaufdruck der Wandlerüberbrückungskupplung das Druckniveau überschreitet, derart abgesenkt, dass sich im hydrodynamischen Drehmomentwandler Luft ansammelt, die das im hydrodynamischen Drehmomentwandler vorhandene Hydraulikfluid aus dem Drehmomentenwandler ausschiebt.

Dieses Ausschieben führt jedoch nachteilhafterweise zu einer kurzfristigen und derartigen Druckerhöhung im hydrodynamischen Drehmomentwandler, dass an dem Wandlerkupplungkolben vorübergehend eine Gesamtkraftkomponente angreift, die ein Schließen der Wandlerüberbrückungskupplung bewirkt, wobei über die Wandlerüberbrückungskupplung in diesem Zustand im Wesentlichen kein Drehmoment führbar ist Im weiteren Betrieb des Drehmomentwandlers wird der Zulaufdruck der Wandlerüberbrückungskupplung sukzessive erhöht, um die gewünschte Übertragungsfähigkeit der Wandlerüberbrückungskupplung einzustellen. Bevor jedoch die Übertragungsfähigkeit der Wandlerüberbrückungskupplung ansteigt, muss zunächst das aufgrund der unechten Kavitation im Drehmomentwandler angesammelte Luftvolumen von zugeführtem Hydraulikfluid verdrängt werden, so dass trotz Anheben des Zulaufdrucks der Wandlerüberbrückungskupplung bis zum Anstieg der Übertragungsfähigkeit der Wandlerüberbrückungskupplung eine gewisse Totzeit in der Ansteuerung der Wandlerüberbrückungskupplung entsteht.

Zum Zeitpunkt, zu dem die Luftansammlung aufgrund der Druckerhöhung des Zulaufdruckes der Wandlerüberbrückungskupplung vollständig aus dem Drehmomentwandler ausgeschoben ist, liegt die Wandlerüberbrückungskupplung plötzlich mit einer Übertragungsfähigkeit vor, bei der von dieser ein anliegendes Drehmoment wenigstens teilweise übertragen wird, so dass für einen Fahrer eines Kraftfahrzeuges ein merkbarer und für diesen unkomfortabler Ruck aufgrund einer Unstetigkeit im Verlauf der Momentenübertragung im Bereich der Wandlerüberbrückungskupplung auftritt, wodurch ein insgesamt unerwünschtes und unkomfortables Fahrverhalten eines Fahrzeugs vorliegt.

Der vorliegenden Erfindung liegt daher die Aufgabe zugrunde, ein hydraulisches Steuersystem für einen hydrodynamischen Drehmomentwandler mit einer geregelten Wandlerüberbrückungskupplung eines Automatgetriebes zur Verfügung zu stellen, mittels welchem ein hoher Fahrkomfort erzielbar ist.

Erfindungsgemäß wird diese Aufgabe mit einem hydraulischen Steuersystem gemäß den Merkmalen des Patentanspruches 1 gelöst.

Das erfindungsgemäße hydraulische Steuersystem für einen hydrodynamischen Drehmomentwandler mit einer geregelten Wandlerüberbrückungskupplung eines Automatgetriebes ist mit einem Wandlerdruckventil zum Steuern des Zulaufdruckes des Drehmomentwandlers und mit einem Wandlerkupplungsventil zum Steuern des Zulaufdruckes der Wandlerüberbrückungskupplung ausgeführt. Die Ventilschieber des Wandlerdruckventils und des Wandlerkupplungsventils sind mit wenigstens einem Vorsteuerdruck und einem Systemdruck beaufschlagbar. Die Wandlerüberbrückungskupplung ist geschlossen, wenn der Zulaufdruck des Drehmomentwandlers kleiner ist als ein vordefinierter Druckwert des Zulaufdrucks der Wandlerüberbrückungskupplung.

Dadurch, dass der Ventilschieber des Wandlerkupplungsventils bei geöffneter Wandlerüberbrückungskupplung an einer Wirkfläche derart mit dem Rücklaufdruck des Drehmomentwandlers beaufschlagt ist und bei geschlossener Wandlerüberbrückungskupplung an der Wirkfläche derart mit dem Zulaufdruck der Wandlerüberbrückungskupplung beaufschlagt ist, dass über den gesamten Betriebsbereich des Drehmomentwandlers wenigstens entweder der Zulaufdruck des Drehmomentwandlers oder der Zulaufdruck der Wandlerüberbrückungskupplung größer als ein vordefiniertes Druckniveau ist, werden auf einfache Art und Weise einen Fahrkomfort beeinträchtigende Luftansammlungen aufgrund unechter Kavitation im Drehmomentwandler vermieden.

Bei dem hydraulischen Steuersystem nach der Erfindung ist ein so genannter Fußpunkt zwischen einer Ventilkennlinie des Wandlerkupplungsventils und einer Ventilkennlinie des Wandlerdruckventils im Vergleich zu herkömmlichen Steuersystemen derart angehoben, dass ein durch die Anhebung des Fußpunktes erhöhter statischer Druck, der sich sowohl auf der Zulaufseite des hydrodynamischen Drehmomentwandlers als auch auf der Zulaufseite der geregelten Wandlerüberbrückungskupplung einstellt, vorliegt, bei dem ein Ausgasen der in dem durch den Drehmomentwandler geführten Hydraulikfluid gelösten Luft über den gesamten Betriebsbereich des Drehmomentwandlers sicher unterbleibt.

Weitere Vorteile und vorteilhafte Ausgestaltungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.

Es zeigt
- Fig. 1: ein stark schematisiert dargestelltes und als hydrodynamischer Drehmomentwandler mit geregelter Wandlerüberbrückungskupplung ausgeführtes Anfahrelement eines Antriebsstranges eines Fahrzeugs;
- Fig. 2: ein stark schematisiertes Schaltschema einer ersten Ausführungsform des erfindungsgemäßen hydraulischen Steuersystems;
- Fig. 3: eine Ventilkennlinie des Wandlerdruckventils und eine Ventilkennlinie des Wandlerkupplungsventils des Steuersystems gemäß Fig. 1 über einem Vorsteuerdruck im Vergleich zu Ventilkennlinien eines Wandlerdruckventils und eines Wandlerkupplungsventils eines herkömmlichen Steuersystems;
- Fig. 4: ein Schaltschema eines zweiten Ausführungsbeispiels eines erfindungsgemäß ausgebildeten Steuersystems;
- Fig. 5: Ventilkennlinien des Wandlerdruckventils und des Wandlerkupplungsventils des Steuersystems gemäß Fig. 4 im Vergleich zu Ventilkennlinien eines herkömmlichen Steuersystems;
- Fig. 6: ein Schaltschema eines dritten Ausführungsbeispiels eines erfindungsgemäß ausgeführten Hydrauliksystems, welches mit einem Wandlerschaltventil ausgebildet ist;
- Fig. 7: ein Schaltschema eines vierten Ausführungsbeispiels eines erfindungsgemäß ausgeführten Hydrauliksystems, welches mit einem Wandlerschaltventil und ohne wandlerdruckventilseitige Vorsteuerdruckabschaltung ausgebildet ist;
- Fig. 8: Ventilkennlinien des Wandlerdruckventils und des Wandlerkupplungsventils des Steuersystems gemäß Fig. 6 und Fig. 7 im Vergleich zu Ventilkennlinien eines herkömmlichen Steuersystems;
- Fig. 9: ein Schaltschema eines fünften Ausführungsbeispiels eines erfindungsgemäßen Steuersystems, welches zur Anhebung des Zulaufdrucks der Wandlerüberbrückungskupplung mit einem Wandlerschaltventil ausgeführt ist; und
- Fig. 10: Ventilkennlinien des Wandlerdruckventils und des Wandlerschaltventils des Steuersystems gemäß Fig. 9 im Vergleich zu Ventilkennlinien eines herkömmlichen Steuersystems.

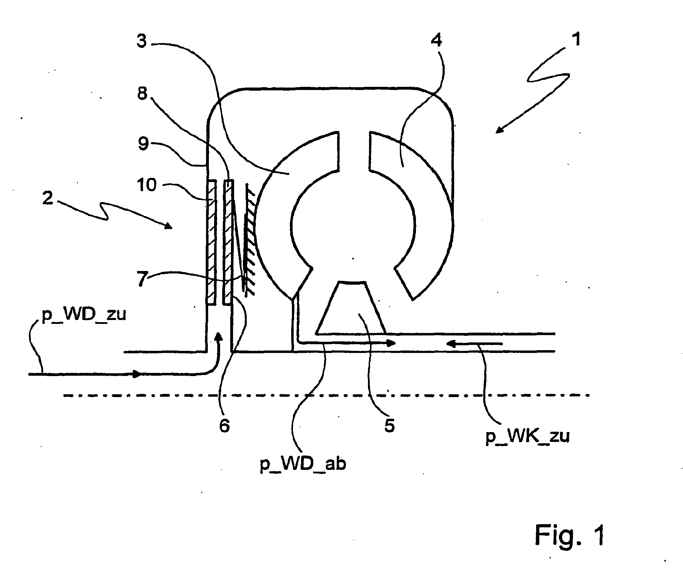

In Fig.1 ist eine stark schematisierte Darstellung eines hydrodynamischen Drehmomentwandlers 1 mit einer geregelten Wandlerüberbrückungskupplung 2 dargestellt, welcher in an sich bekannter Art und Weise mit einem Turbinenrad 3, einem Pumpenrad 4 und einem Leitrad 5 ausgebildet ist. Des Weiteren ist ein Wandlerkupplungskolben 6 vorgesehen, der drehfest mit dem Turbinenrad 3 verbunden ist Zusätzlich ist der Wandlerkupplungskolben 6 in Bezug auf das Pumpenrad 4 in axialer Richtung verschieblich ausgeführt, wobei sich eine axiale Position des Wandlerkupplungskolbens 6 in Abhängigkeit einer an dem Wandlerkupplungskolben 6 angreifenden und in Schließrichtung der Wandlerüberbrückungskupplung 2 wirkenden Federeinrichtung 7, einem Zulaufdruck p_WD_zu des Drehmomentwandlers und eines Zulaufdrucks p_WK_zu der Wandlerüberbrückungskupplung 2, d. h. in Abhängigkeit einer aus diesen drei Kraftkomponenten resultierenden und an dem Wandlerkupplungskolben 6 angreifenden Gesamtkraftkomponente, einstellt

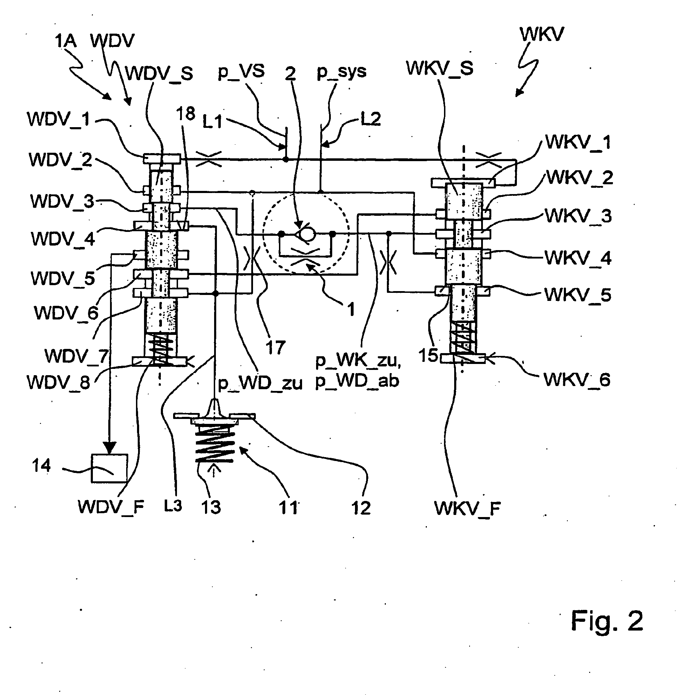

Bei geschlossener Wandlerüberbrückungskupplung 2 kommt der Wandlerkupplungskolben 6 mit einem auf seiner dem Turbinenrad 3 abgewandten Seite angeordneten Reibbelag 8 an einem an einem Gehäuse 9 vorgesehenen weiteren Reibbelag 10 zur Anlage, wobei das Gehäuse 9 drehfest mit dem Pumpenrad 4 verbunden ist. Im Gegensatz dazu liegt der Wandlerkupplungskolben 6 bei geöffneter Wandlerüberbrückungskupplung 2 nicht an dem weiteren Reibbelag 10 des Gehäuses 9 an, so dass der Drehmomentwandler 1 ausgehend von einem in Fig. 2 dargestellten Wandlerdruckventil WDV über die Wandlerüberbrückungskupplung 2 in Richtung eines ebenfalls in Fig. 2 dargestellten Wandlerkupplungsventils WKV von Hydraulikfluid durchströmt wird. Dabei strömt das Hydraulikfluid mit einem über das Wandlerdruckventil WDV eingestellten Zulaufdruck p_WD_zu des Drehmomentwandlers 1 in den Drehmomentwandler 1 ein und strömt mit einem Rücklaufdruck p_WD_ab in Abhängigkeit der hydrodynamischen Verhältnisse im Drehmomentwandler 1 entsprechend gewandelter Höhe in Richtung des Wandlerkupplungsventils WKV aus dem Drehmomentwandler 1 aus.

Der Rücklaufdruck p_WD_ab des Drehmomentwandlers 1 entspricht dem über das Wandlerkupplungsventil WKV eingestellten Zulaufdruck p_WK_zu der Wandlerüberbrückungskupplung 2, wobei sich in Abhängigkeit des Zulaufdrucks p_WD_zu des Drehmomentwandlers 1 und des Zulaufdrucks p_WK_zu der Wandlerüberbrückungskupplung 2 im Drehmomentwandler 1 ein statischer Druck bzw. ein betriebszustandsabhängiges Druckniveau einstellt.

Mit abnehmendem Zulaufdruck p_WD_zu des Drehmomentwandlers 1 nimmt die am Wandlerkupplungskolben 6 angreifende und in Öffnungsrichtung der Wandlerüberbrückungskupplung 2 wirkende Gesamtkraftkomponente ab, so dass ab Unterschreiten eines Druckwerts des Zulaufdrucks p_WD_zu des Drehmomentwandlers 1 die Wandlerüberbrückungskupplung 2 schließt und der Drehmomentwandler 1 ausgehend vom Wandlerdruckventil WDV nicht mehr durchströmt wird. Dabei schließt die Wandlerüberbrückungskupplung 6 bei einem Druckwert des Zulaufdrucks p_WD_zu des Drehmomentwandlers 1, der kleiner als ein vordefinierter Druckwert des Zulaufdrucks p_WK_zu der Wandlerüberbrückcungskupplung ist. In diesem Betriebszustand des Drehmomentwandlers 1 greift an den Wandlerkupplungskolben 6 eine die Wandlerüberbückungskupplung 2 schließende Gesamtkraftkomponente an. D. h., dass die sich aus der Federkraft der Federeinrichtung 7 der Wandlerüberbrückungskupplung 2 und dem am Wandlerkupplungskolben 6 angreifenden Zulaufdruck p_WK_zu der Wandlerüberbrückungskupplung zusammensetzende Kraftkomponente größer ist als die aus dem Zulaufdruck p_WD_zu des Drehmomentwandlers 1 resultierende Kraftkomponente.

Der als so genannter Zweileitungswandler ausgeführte Drehmomentwandler 1 und die geregelte Wandlenrüberbrückungskupplung 2 sind in Fig. 2 stark schematisiert in Form einer Drosselstelle sowie eines Rückschlagventils dargestellt, wobei der hydrodynamische Drehmomentwandler 1 durch das Wandlerdruckventil WDV, das mit mehreren Steuerräumen WDV_1 bis WDV_8, einer Federeinrichtung WDV_F und einem Ventilschieber WDV_S ausgeführt ist, angesteuert wird. Die geregelte Wandlerüberbrückungskupplung 2 wird über das Wandlerkupplungsventil WKV angesteuert, das ebenfalls mit mehreren Steuerräumen WKV_1 bis WKV_6, einer Federeinrichtung WKV_F und einem Ventilschieber WK\/_S ausgebildet ist.

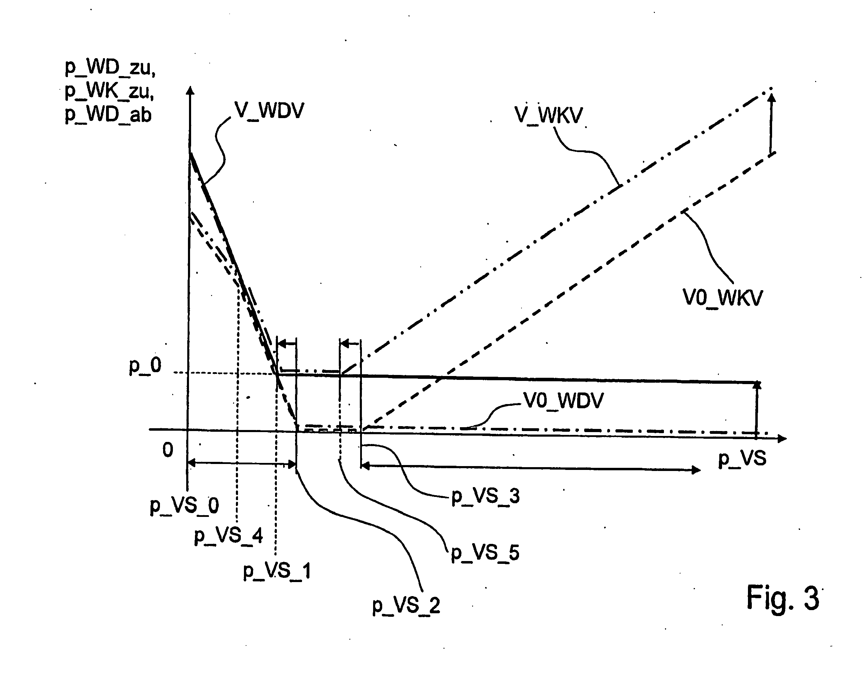

Das Wandlerdruckventil WDV und das Wandlerkupplungsventil WKV werden über eine Zuleitung L1 von einem nicht näher dargestellten Drucksteuerventil eines Vorsteuersystems mit einem über ein nicht näher dargestelltes elektrisches Getriebesteuergerät in an sich bekannter Art und Weise eingestellten Vorsteuerdruck p_VS an Stirnflächen der Ventilschieber WDV_S und WKV_S, die mit den Steuerräumen WDV_1 und WKV_1 in Verbindung stehen, entgegen den in den Steuerräumen WDV_8 und WKV_8 angeordneten Federeinrichtungen WDV_F und WKV_F beaufschlagt, wobei in Abhängigkeit des über die Zuleitung L1 an dem Wandlerdruckventil WDV bzw. an dem Wandlerkupplungsventil WKV anliegenden Vorsteuerdrucks p_VS jeweils der Zulaufdruck p_WD_zu des Drehmomentwandlers 1 und der Zulaufdruck p_WK_zu der Wandlerüberbrückungskupplung 2 in der in Fig. 3 dargestellten Art und Weise einstellbar sind. Zudem werden die Zulaufdrücke p_WD_zu und p_WK_zu in Abhängigkeit eines über eine Zuleitung L2 und über ein in an sich bekannter Art und Weise als Druckbegrenzungsventil ausgebildetes und in der Zeichnung nicht näher dargestelltes Systemdruckventil eingestellten Systemdrucks p_sys über das Wandlerdruckventil WDV und das Wandlerkupplungsventil WKV geregelt eingestellt.

Der Systemdruck p_sys versorgt über die Zuleitung L2, die mit einer Drossel 17 ausgeführt ist, den siebten Steuerraum WDV_7 des Wandlerdruckventils WDV, der über eine Leitung L3 mit dem vierten Steuerraum WKV_4 des Wandlerkupplungsventils WKV und einem Druckbegrenzungsventil 11 in Verbindung steht. Zusätzlich ist der eine Entlastungssteuerzunge des Wandlerdruckventils WDV darstellende vierte Steuerraum WDV_4 mit dem Druckbegrenzungsventil 11 verbunden, mittels welchem im Steuersystem 1A gemäß Fig. 2 ein vordefiniertes Druckniveau p_0 niemals unterschritten wird. Das Druckbegrenzungsventil 11 ist vorliegend als Plattenventil ausgebildet, welches eine gegen den statischen Druck im hydrodynamischen Drehmomentwandler 1 angefederte Ventilplatte 12 und eine Federeinrichtung 13 aufweist.

Darüber hinaus ist der fünfte Steuerraum WDV_5 mit einem stark schematisiert dargestellten Schmier- und Kühlkreislauf 14 einer Getriebevorrichtung des Antriebsstranges verbunden, um den Schmier- und Kühlkreislauf 14 bei entsprechender Stellung des Ventilschiebers WDV_S des Wandlerdruckventils WDV mit der für die Schmierung und Kühlung der Getriebekomponenten der Getriebeeinrichtung erforderlichen Schmier- und Kühlölmenge zu versorgen.

In Fig. 3 sind die Ventilkennlinien V_WDV und V_WKV des Wandlerdruckventils WDV und des Wandlerkupplungsventils WKV des Steuersystems 1 A gemäß Fig. 2 dargestellt, welche sich aufgrund der Anordnung des Druckbegrenzungsventils 11 über dem Vorsteuerdruck p_VS einstellen. Dabei entsprechen die Ventilkennlinien V_WDV und V_WKV des Wandlerdruckventils WDV und des Wandlerkupplungsventils WKV jeweils den Verläufen der Zulaufdrücke p_WD_zu und p_WK_zu des Drehmomentwandlers 1 und der Wandlerüberbrückungskupplung 2. Des Weiteren sind den Ventilkennlinien V_WDV und V_WKV des Wandlerdruckventils WDV und des Wandlerkupplungsventils WKV Ventilkennlinien VO_WDV und VO_WKV des Wandlerdruckventils WDV und des Wandlerkupplungsventils WKV gegenübergestellt, welche sich beim Betrieb des Steuersystems 1 A ohne das Druckbegrenzungsventil 11 einstellen würden, wobei die Ventilkennlinien V_WDV und VO_WDV sowie V_WKV und VO_WKV zwischen einem ersten Vorsteuerdruckwert p_VS_0 und einem zweiten Vorsteuerdruckwert p_VS_1 im Wesentlichen den gleichen Verlauf aufweisen.

Ohne das Druckbegrenzungsventil 11 sinkt sowohl der Zulaufdruck p WD_zu des hydrodynamischen Drehmomentwandlers 1 als auch der Zulaufdruck p_WK_zu der geregelten Wandlerüberbrückungskupplung 2 im Steuersystem 1 A mit steigendem Vorsteuerdruck p_VS zu einem dritten Vorsteuerdruckwert p_VS_2 auf nahezu Null ab und verbleibt auf diesem Niveau bis zu einem vierten Vorsteuerdruckwert p_VS_3.

Der Bereich zwischen dem vierten Vorsteuerdruckwert p_VS_3 und dem dritten Vorsteuerdruckwert p_VS_2 der Ventilkennlinien VO_WDV, VO_WKV wird als so genannter Fußpunktbereich des Drehmomentwandlers 1 bezeichnet, wobei die Wandlerüberbrückungskupplung 2 vor dem dritten Vorsteuerdruckwert p_VS_2 geöffnet ist und nach dem vierten Vorsteuerdruckwert p_VS_3 geschlossen ist. Im Vorsteuerdruckbereich zwischen den Vorsteuerdruckwerten p_VS_2 und p_VS_3 kommt der Wandlerkupplungskolben 6 durch die in Schließrichtung der Wandlerüberbrückungskupplung 2 wirkende Federeinrichtung 7 am Gehäuse 9 zum Anliegen, wobei in diesem Betriebszustand der Wandlerüberbrückungskupplung 2 im Wesentlichen kein Drehmoment über die Wandlerüberbrückungskupplung 2 führbar ist.

Erst nach dem vierten Vorsteuerdruck p_VS_3 und einem weiter steigenden Vorsteuerdruck p_VS steigt der Zulaufdruck p_WK_zu der Wandlerüberbrückungskupplung 2 stetig an, wodurch die Übertragungsfähigkeit der Wandlerüberbrückungskupplung 2 bis auf einen maximalen Wert angehoben wird.

Bei dem in Fig. 2 dargestellten Steuersystem 1 A stellt der so genannte Fußpunktbereich des hydrodynamischen Drehmomentwandlers einen gewissen Bereich des Vorsteuerdrucks dar, in dem weder der Zulaufdruck p_WD_zu des hydrodynamischen Drehmomentwandlers 1 noch der Zulaufdruck p_WK_zu der geregelten Wandierüberbrückungskupplung 2 verändert wird. D. h. der Fußpunktbereich des Drehmomentwandlers 1 ist im Wesentlichen ein neutraler Druckregelbereich, der zum Ausgleich von Toleranzen in dem Steuersystem 1 A zugeordneten Vorsteuersystem vorgesehen ist.

Mit den Ventilkennlinien VO_WDV und VO_WKV des Wandlerdruckventils WDV und des Wandlerkupplungsventils WKV treten jedoch nachteilhafterweise die vorbeschriebenen Luftansammlungen im Drehmomentwandler 1 auf. Aus diesem Grund wird im Steuersystem 1A mittels des Druckbegrenzungsventils 11 ein vordefiniertes Druckniveau p_0 eingestellt, bei dem die im Hydraulikfluid gelöste Luft im Hydraulikfluid in gelöster Form verbleibt. Das Druckbegrenzungsventil 11 ist vorliegend zwischen einem nicht näher dargestellten drucklosen Hydraulikfluidreservoir und dem Wandlerdruckventil WDV sowie dem Wandlerkupplungsventil WKV angeordnet, so dass sowohl der Zulaufdruck p_WD_zu des Drehmomentwandlers 1 als auch der Zulaufdruck p_WK_zu der Wandlerüberbrückungskupplung 2 niemals unterhalb des vordefinierten Druckniveaus p_0 absinkt und die Ventilkennlinien V_WDV und V_WKV von den Ventilkennlinien VO_WDV und VO_WKV in der in Fig. 3 dargestellten Art und Weise abweichen.

Das Druckniveau p_0 ist von der steuersystemseitig mit hydraulischem Druck beaufschlagbaren Plattenventilwirkfläche der Ventilplatte 12 sowie der Federkraft der Federeinrichtung 13 des Druckbegrenzungsventils 11 abhängig und ist beispielsweise durch Variation dieser beiden Parameter in Abhängigkeit des jeweils vorliegenden Betriebszustandes des Steuersystems 1A veränderbar.

Dadurch, dass durch das Druckbegrenzungsventil 11 im Steuersystem 1 A auf der Zulaufseite des hydrodynamischen Drehmomentwandlers 1 das vordefinierte Druckniveau p_0 an dem Wandlerkupplungskolben 6 auch bei geschlossener Wandlerüberbrückungskupplung 2 anliegt, reduziert sich die Übertragungsfähigkeit der Wandlerüberbrückungskupplung 2 bei gleichem Zulaufdruck p_WK_zu der Wandlerüberbrückungskupplung 2 im Vergleich zu einem Steuersystem, bei dem das Druckniveau auf der Zulaufseite des Drehmomentwandlers 1 im Wesentlichen Null ist, da die Druckdifferenz bei geschlossener Wandlerüberbrückungskupplung zwischen der Zulaufseite der Wandlerüberbrückungskupplung und dem Drehmomentwandler um den Wert des vordefinierten Druckniveaus p_0 reduziert ist.

Diese Reduzierung wird vorliegend durch einen wenigstens um das vordefinierte Druckniveau p_0 erhöhten Zulaufdruck p_WK_zu der Wandlerüberbrückungskupplung 2 kompensiert. Da zusätzlich der Beginn des Fußpunktbereichs des Drehmomentwandlers 1 durch die Anhebung des Druckniveaus im Steuersystem 1 vom dritten Vorsteuerdruckwert p_VS_2 in Richtung des zweiten Vorsteuerdruckwerts p_VS_1 verschoben ist, wird die mittels der Druckerhöhung des Zulaufdrucks p_WK_zu der Wandlerüberbrückungskupplung 2 kompensierte Verringerung der Übertragungsfähigkeit der Wandlerüberbrückungskupplung ohne Veränderung der Ventilverstärkung des Wandlerkupplungsventils WKV erreicht. Das heißt, dass die Kompensation lediglich durch eine schwächere Ventilkennlinie V_WKV umgesetzt wird, wodurch die Auflösung der Wandlerüberbrückungskupplung 2 gegenüber einem herkömmlichen Steuersystem ohne Druckbegrenzungsventil nicht verändert wird. Dabei wird vorliegend unter dem Begriff Auflösung die Abhängigkeit zwischen der Druckänderung des Zulaufdrucks p_WK_zu der Wandlerüberbrückungskupplung 2 in Abhängigkeit einer Stromänderung im Bereich des Drucksteuerventils des Vorsteuersystems verstanden, über welches der Vorsteuerdruck p_VS von dem elektrischen Getriebesteuergerät eingestellt wird.

Nachfolgend wird die Funktionsweise des Steuersystems 1 A gemäß Fig. 2 in Verbindung mit der Darstellung gemäß Fig. 3 ausgehend vom ersten Vorsteuerdruckwert p_VS_0 näher beschrieben. Der erste Vorsteuerdruckwert p_VS_0, ist wenigstens annähernd Null. In diesem Betriebszustand ist der Ventilschieber WDV_S des Wandlerdruckventils WDV durch die am Ventilschieber WDV_S in entgegengesetzter Richtung zu dem Steuerdruck p_VS am Ventilschieber WDV_S angreifende Federeinrichtung WDV_F umgeschoben, dass der Zulaufdruck p_WD_zu des hydrodynamischen Drehmomentwandlers 1 maximal ist. Dies resultiert aus der Tatsache, dass der Systemdruck p_sys über den sich in völlig umgeschobener Stellung befindlichen Ventilschieber WDV_S des Wandlerdruckventils WDV vom Wandlerdruckventil WDV auf ein Maximum reduziert wird, welches über eine Wirkfläche 18 des Ventilschiebers WDV_S und die Federkraft der Federeinrichtung WDV_F des Wandlerdruckventils WDV eingestellt wird.

Gleichzeitig ist der siebte Steuerraum WDV_7 von dem sechsten Steuerraum WDV_6 des Wandlerdruckventils WDV in der Druck regelnden Stellung des Ventilschiebers WDV_S getrennt, so dass die Verbindung zwischen der Zuführleitung L2 und dem zweiten Steuerraum WKV_2 des Wandlerkupplungsventils WKV gesperrt ist. Die Druckregelung im Bereich des dritten Steuerraums WDV_3 des Wandlerdruckventils WDV findet über die so genannte Modulation des Wandlerdruckventils WDV zwischen dem zweiten Steuerraum WDV_2 und dem vierten Steuerraum WDV_4 statt, wobei der Druck des dritten Steuerraums WDV_3 größer ist als das über das Druckbegrenzungsventil 11 vordefinierte Druckniveau.

Nach dem Durchströmen des hydrodynamischen Drehmomentwandlers 1 liegt am dritten Steuerraum WKV_3 und dem fünften Steuerraum WKV_5 des Wandlerkupplungsventils WKV der Rücklaufdruck p_WD_ab an, der im Wesentlichen dem in Fig. 3 dargestellten Zulaufdruck p_WK_zu der geregelten Wandlerüberbrückungskupplung 2 entspricht, wobei die Differenz zwischen dem Zulaufdruck p_WD_zu des Drehmomentwandlers 1 und dem Rücklaufdruck p_WD_ab des Drehmomentwandlers 1 bzw. des Zulaufdrucks p_WK_zu der Wandlerüberbrückungskupplung 2 zwischen dem ersten Vorsteuerdruckwert p_VS_0 und einem weiteren Vorsteuerdruckwert p_VS_4 aufgrund eines Druckabfalls, der beim Durchströmen des hydrodynamischen Drehmomentwandlers 1 auftritt, verursacht wird.

Das Wandlerkupplungsventil WKV wird bei Anliegen des ersten Vorsteuerdruckwerts p_VS_0 durch die an dem Ventilschieber WKV_S angreifende Federeinrichtung WKV_F und den gleichgerichtet an einer Wirkfläche 15 des Ventilschiebers WKV_S des Wandlerkupplungsventils WKV angreifenden Rücklaufdruck p_WD_ab des hydrodynamischen Drehmomentwandlers 1 vollständig umgeschoben, so dass der vierte Steuerraum WKV_4 vom dritten Steuerraum WKV 3 des Wandlerkupplungsventils WKV getrennt ist und der über die Zuführleitung L2 am Wandlerkupplungsventil WKV anliegende Systemdruck p_sys nicht in Richtung der geregelten Wandlerüberbrückungskupplung 2 geführt wird.

Mit steigendem Vorsteuerdruck p_VS werden sowohl der Ventilschieber WDV_S des Wandlerdruckventils WDV als auch der Ventilschieber WKV_S des Wandlerkupplungsventils WKV entgegen der in Abhängigkeit der Federrate der Federeinrichtung WDV_F bzw. WKV_F am Ventilschieber WDV_S bzw. WKV_S anliegenden Federkraft und dem am Ventilschieber WKV S des Wandlerkupplungsventils WKV anliegenden Rücklaufdruck p_WD_ab des Drehmomentwandlers 1 derart verschoben, dass der Zulaufdruck p_WD_zu des hydrodynamischen Drehmomentwandlers 1 und damit auch der Rücklaufdruck p_WD_ab des Drehmomentwandlers 1 in der in Fig. 3 dargestellten Art und Weise bis hin zum zweiten Vorsteuerdruckwert p_VS_1 durch Anheben des Vorsteuerdrucks p_VS reduziert werden, wobei sich der Ventilschieber WKV_S des Wandlerkupplungsventils erst kurz vor Überschreiten des Druckwertes p_0 in Richtung der Modulationssteuerkanten der Steuerräume WKV_2 und WKV_4 bewegt.

Des Weiteren wird der Ventilschieber WKV_S des Wandlerkupplungsventils WKV mit zunehmendem Vorsteuerdruck p_VS entgegen der Federrate der Federeinrichtung WKV_F zunehmend in Richtung des sechsten Steuerraums WKV_6 verschoben, so dass der Ventilschieber WKV_S die Steuerkante des vierten Steuerraums WKV_4 überstreicht und dieser mit dem dritten Steuerraum WKV_3 verbunden wird.

Zum fünften Vorsteuerdruckwert p_VS_4 wird eine Durchströmung des Drehmomentwandlers 1 durch den Gegendruck des Schmier- und Kühlkreislaufes 14 verhindert, so dass sich die Ventilkennlinien V_WDV und V_WKV des Wandlerdruckventils WDV und Wandierkupplungsventils WKV synchronisieren. Das heißt, dass der Zulaufdruck p_WD_zu des Wandlerdruckventils WDV und der Zulaufdruck p_WK_zu der Wandlerüberbrückungskupplung 2 ab dem fünften Vorsteuerdruckwert p_VS_4 gleich sind, wobei sich der Zulaufdruck p_WK_zu der Wandlerüberbrückungskupplung 2 zu diesem Vorsteuerdruckwert aus dem Rücklaufdruck p_WD_ab und dem über das Wandlerkupplungsventil WKV über den vierten Steuerraum WKV_4 und den dritten Steuerraum WKV_3 durchgeleiteten Druckanteil des über die Zuführleitung L2 am Wandlerkupplungsventil WKV anliegenden Systemsdrucks p_sys zusammensetzt.

Zwischen dem zweiten Vorsteuerdruckwert p_VS_1 und dem sechsten Vorsteuerdruckwert p_SV_5, welche den Fußpunktbereich des über das Steuersystem 1 A mit dem Druckbegrenzungsventil 11 angesteuerten Drehmomentwandlers 1 begrenzen, wird trotz weiter steigendem Vorsteuerdruck p_VS weder der Zulaufdruck p_WD_zu des Drehmomentwandlers 1 noch der Zulaufdruck p_WK_zu der Wandlerüberbrückungskupplung 2 verändert, wobei die beiden Zulaufdrücke p_WD_zu und p_WK_zu auf dem durch das Druckbegrenzungsventil 11 eingestellten vordefinierten Druckniveau p_0 verbleiben.

Zum Ende des Fußpunktbereichs des Drehmomentwandlers 1, d. h. oberhalb des sechsten Vorsteuerdruckwerts p_VS_5, bewirkt ein weiteres Ansteigen des Vorsteuerdrucks p_VS ein Anheben des Zulaufdrucks p_WK_zu der Wandlerüberbrückungskupplung 1, während der Zulaufdruck p_WD_zu des Drehmomentwandiers in der in Fig. 2 dargestellten Position des Ventilschiebers WDV_S des Wandlerdruckventils WDV keine Veränderung erfährt und auf dem vordefinierten Druckniveau p_0 verbleibt.

Das bedeutet, dass sowohl der Zulaufdruck p_WD_zu des Drehmomentwandlers 1 als auch der Zulaufdruck p_WK_zu der Wandlerüberbrückungskupplung 2 im Gegensatz zu einem Steuersystem ohne Druckbegrenzungsventil über alle Betriebszustände des Drehmomentwandlers 1 oberhalb des vordefinierten Druckniveaus p_0 liegt, wodurch die aus der Praxis bekannten und eine Funktionsweise eines Drehmomentwandlers 1 und einer damit korrespondierenden Wandlerüberbrückungskupplung 2 negativ beeinflussenden hydrodynamischen Effekte auf einfache Art und Weise vermieden werden.

Zusätzlich ist der Fußpunktbereich des hydrodynamischen Drehmomentwandlers 1 bei dem Steuersystem 1A gemäß Fig. 2 in der in Fig. 3 dargestellten Art und Weise gegenüber dem Fußpunktbereich eines Steuersystems ohne Druckbegrenzungsventil in Richtung niedrigerer Vorsteuerdruckwerte verschoben. Damit wird erreicht, dass die Wandlerüberbrückungskupplung 2 trotz des bei geschlossener Wandlerüberbrückungskupplung 2 erhöhten Zulaufdrucks p_WD_zu des Drehmomentwandlers 1 bei jeweils demselben Vorsteuerdruckwert p_VS die gleiche Übertragungsfähigkeit aufweist wie bei einem Steuersystem ohne Druckbegrenzungsventil. Damit wird auf einfache Art und Weise erreicht, dass die Ansteuerung des Drucksteuerventils des Vorsteuerdrucksystems, über welches der Vorsteuerdruck p_VS in Abhängigkeit einer elektrischen Ansteuerung durch das elektrische Getriebesteuergerät eingestellt wird, wie bei einem Steuersystem ohne Druckbegrenzungsventil erfolgen kann.

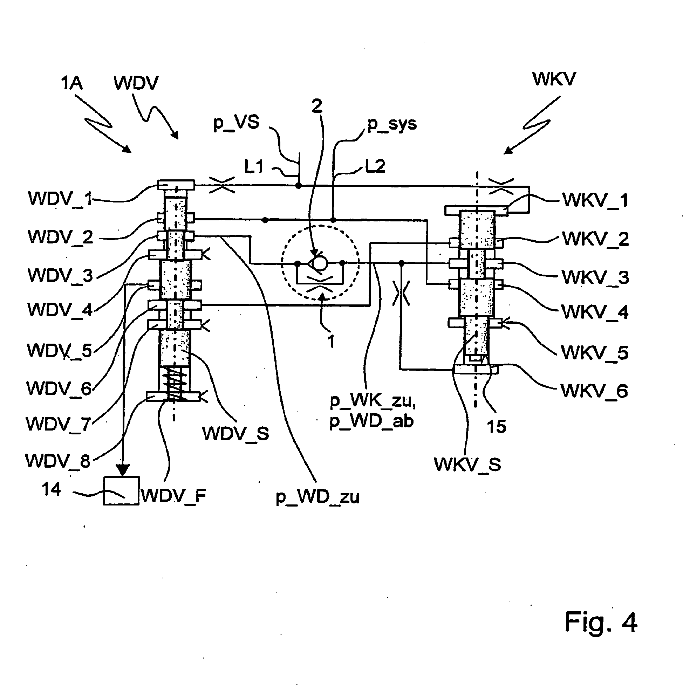

Das in Fig. 4 dargestellte Schaltschema einer zweiten Ausführungsform eines erfindungsgemäß ausgeführten Steuersystems 1 A ist in ähnlicher Art und Weise wie das Steuersystem 1A gemäß Fig. 2 aufgebaut, weshalb in der nachfolgenden Beschreibung lediglich auf die Unterschiede zwischen diesen beiden Steuersystemen näher eingegangen wird.

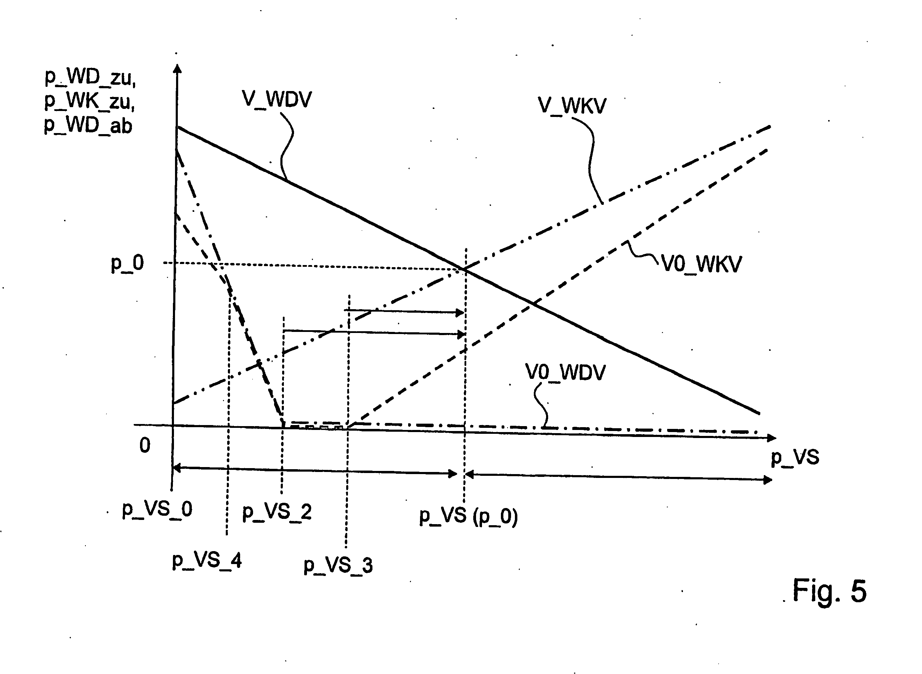

Das Steuersystem 1A gemäß Fig. 4 ist im Gegensatz zu dem Steuersystem gemäß Fig. 2 ohne Druckbegrenzungsventil ausgeführt, so dass die Entlastungssteuerzunge bzw. der vierte Steuerraum WDV_4 des Wandlerkupplungsventils direkt mit dem drucklosen Hydraulikfluidreservoir in Verbindung steht und der Zulaufdruck p_WD_zu des Drehmomentwandlers 1 in der in Fig. 5 dargestellten Art und Weise im Wesentlichen auf Null absenkbar ist.

Das Wandlerkupplungsventil WKV gemäß Fig. 4 ist im Gegensatz zu dem Wandlerkupplungsventil WKV gemäß Fig. 2 ohne die Federeinrichtung WKV_F ausgebildet und der Rücklaufdruck p_WD_ab des Drehmomentwandlers 1 bzw. der Zulaufdruck p_WK_zu der Wandlerüberbrückungskupplung 2 wird bei dem Wandlerkupplungsventil WKV gemäß Fig. 4 auf eine größere Steuerdruckfläche bzw. Wirkfläche 15 des Ventilschiebers WKV_S als beim Wandlerkupplungsventil WKV gemäß Fig. 2 geführt.

Die vorstehend beschriebene und von der Ausgestaltung des Steuersystems 1A gemäß Fig. 2 abweichende Ausführung des Steuersystems 1A gemäß Fig. 4 führt zu den in Fig. 5 dargestellten Ventilkennlinien V_WDV und V_WKV des Wandlerdruckventils WDV und des Wandlerkupplungsventils WKV, welchen wiederum die zu Fig. 3 beschriebenen Ventilkennlinien V0_WDV und V0_WKV eines herkömmlich ausgeführten Steuersystems gegenübergestellt sind.

Dabei steht die Ventilkennlinie V_WKV des Wandlerkupplungsventils WKV bei geöffneter Wandlerüberbrückungskupplung 2 in Abhängigkeit des Vorsteuerdrucks p_VS und des in Bezug auf den Vorsteuerdruck p_VS entgegengesetzt am Ventilschieber WKV_S des Wandlerkupplungsventils WKV angreifenden Rücklaufdrucks p_WD_ab des Drehmomentwandlers 1. Bei geschlossener Wandlerüberbrückungskupplung 2 steht die Ventilkennlinie V_WKV des Wandlerkupplungsventils WKV in Abhängigkeit des Vorsteuerdrucks p_VS und des dem Vorsteuerdruck p_VS entgegengesetzt am Ventilschieber WKV_S des Wandlerkupplungsventils WKV angreifenden Zulaufdrucks p_WK_zu der Wandlerüberbrückungskupplung 2. Damit übersteigt der Zulaufdruck p_WK_zu der Wandlerüberbrückungskupplung 2 das vordefinierte Druckniveau p_0 spätestes zu einem Vorsteuerdruckwert p_VS (p_0), zu dem der Zulaufdruck p_WD_zu des Drehmomentwandlers 1 das vordefinierte Druckniveau p_0 unterschreitet. Damit ist gewährleistet, dass der statische Druck im Drehmomentwandler 1 wie bei dem in Fig. 2 dargestellten Steuersystem 1A niemals unterhalb des vordefinierten Druckniveaus p_0 absinkt und Luftansammlungen im Drehmomentwandler 1 wirkungsvoll vermieden werden.

Der Fußpunktbereich des Drehmomentwandlers 1 ist bei dem in Fig. 4 dargestellten Steuersystem 1 A auf den Schnittpunkt der Ventilkennlinien V_WDV und V_WKV des Wandlerdruckventils WDV und des Wandlerkupplungsventils WKV reduziert, womit Toleranzen im Vorsteuersystem in geringerem Umfang als bei dem Steuersystem 1A gemäß Fig. 2 abdeckbar sind, wohingegen das Steuersystem 1A gemäß Fig. 4 ohne Druckbegrenzungsventil ausgebildet und daher im Vergleich zu dem Steuersystem gemäß Fig. 2 durch geringere Herstellkosten gekennzeichnet ist.

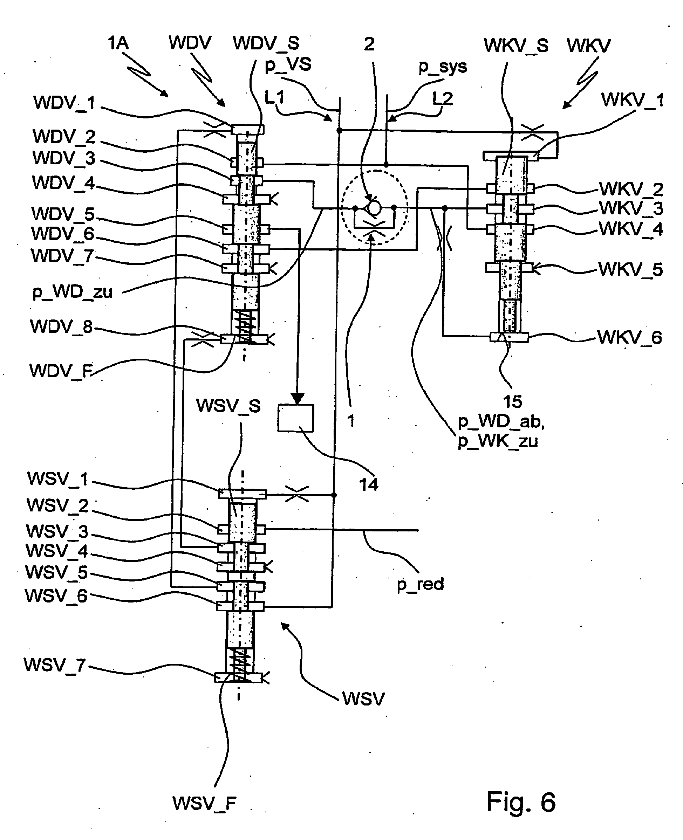

Ein drittes Ausführungsbeispiel eines erfindungsgemäß ausgebildeten Steuersystems 1A ist in Fig. 6 in Form eines Schaltschemas dargestellt, wobei das Wandlerdruckventil WDV und das Wandlerkupplungsventil WKV vom Aufbau her im Wesentlichen dem Wandlerdruckventil und dem Wandlerkupplungsventil des Steuersystems gemäß Fig. 4 entsprechen.

Zusätzlich ist das Steuersystem 1A gemäß Fig. 6 mit einem Wandlerschaltventil WSV ausgeführt, das sieben Steuerräume WSV_1 bis WSV_7, einen Ventilschieber WSV_S und eine Federeinrichtung WSV_F aufweist. Das Wandlerschaltventil WSV wird an der der Federeinrichtung WSV_F abgewandten Stirnfläche des Ventilschiebers WSV_S mit dem Vorsteuerdruck p_VS beaufschlagt, so dass der Vorsteuerdruck p_VS der Federrate der Federeinrichtung WSV_F entgegenwirkt und der Ventilschieber WSV_S des Wandlerschaltventils WSV zwischen einer ersten in Fig. 6 dargestellten Schaltstellung und einer zweiten Schaltstellung, bei dem die mit dem Vorsteuerdruck p_VS beaufschlagbare Stirnfläche des Ventilschiebers WSV_S am Gehäuse des Wandlerschaltventils WSV zum Anliegen kommt, umschaltbar ist.

Des Weiteren liegt an dem Wandlerschaltventil WSV_S ein so genannter Reduzierdruck p_red an, der bei entsprechender Position des Ventilschiebers WSV_S des Wandlerschaltventils WSV vom zweiten Steuerraum WSV_2 und über den dritten Steuerraum WSV_3 in Richtung des achten Steuerraums WDV_8 des Wandlerdruckventils WDV, in dem die Federeinrichtung WDV_F des Wandlerdruckventils angeordnet ist, weitergeleitet wird. Darüber hinaus liegt der Vorsteuerdruck p_VS auch an dem sechsten Steuerraum WSV_6 des Wandlerschaltventils WSV an, der bei entsprechender Position des Ventilschiebers WSV_S des Wandlerschaltventils WSV über den fünften Steuerraum WSV_5 in Richtung des ersten Steuerraums WDV_1 des Wandlerdruckventils 1 geführt wird.

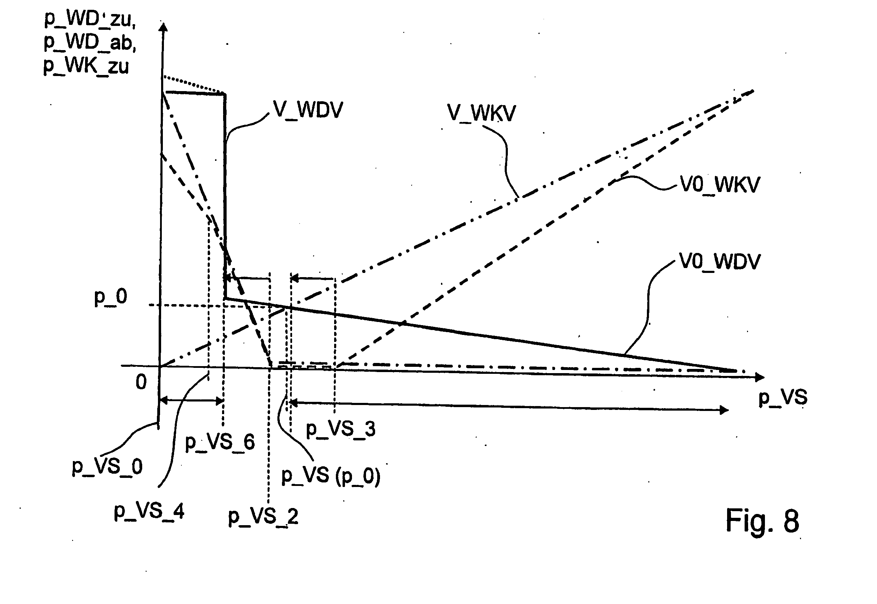

Das bedeutet, dass die in Fig. 8 dargestellte Ventilkennlinie V_WDV des Wandlerdruckventils WDV gemäß Fig. 6 vor Erreichen eines vordefinierten siebten Vorsteuerdruckwerts p_VS_6 des Vorsteuerdrucks p_VS in Abhängigkeit eines an dem Wandlerschaltventil WSV anliegenden und in Richtung des Wandlerdruckventils WDV durchgeschalteten Drucksignals bzw. des Reduzierdrucks p_red und einer gleichgerichtet an dem Ventilschieber WDV_S des Wandlerdruckventils WDV angreifenden Federeinrichtung WDV_F steht und im Wesentlichen konstant verläuft. Ab Überschreiten des vordefinierten siebten Vorsteuerdruckwerts p_VS_6 des Vorsteuerdrucks p_VS steht die Ventilkennlinie V_WDV des Wandlerdruckventils WDV in Abhängigkeit des dann über das Wandlerschaltventil WSV in Richtung des ersten Steuerraums WDV_1 des Wandlerdruckventils WDV durchgeschalteten Vorsteuerdrucks p_VS und der entgegengesetzt zu dem Vorsteuerdruck p_VS an dem Ventilschieber WDV_S des Wandlerdruckventils WDV wirkenden Federeinrichtung WDV_F, da die Verbindung zwischen dem zweiten Steuerraum WSV_2 und dem dritten Steuerraum WSV_3 des Wandlerschaltventils WSV unterbrochen ist und der achte Steuerraum WDV_8 des Wandlerdruckventils WDV nicht länger mit dem Reduzierdruck p_red bzw. dem am Wandlerschaltventil WSV anliegenden Drucksignal beaufschlagt wird.

Dadurch, dass das Wandlerdruckventil WDV bei Überschreiten des siebten Vorsteuerdruckwerts p_VS_6 nicht länger im Bereich des achten Steuerraums WDV_8 mit dem Reduzierdruck p_red beaufschlagt wird, wird der Zulaufdruck p_WD_zu des Drehmomentwandlers in der in Fig. 8 durch den senkrechten Bereich der Ventilkennlinie V_WDV des Wandlerdruckventils WDV zum Vorsteuerdruckwert p_VS_6 grafisch wiedergegebenen Art und Weise sprunghaft reduziert. Anschließend weist der Zulaufdruck p_WD_zu des Drehmomentwandlers 1 bzw. die Ventilkennlinie V_WDV des Wandlerdruckventils WDV mit steigendem Vorsteuerdruck p_VS einen stetigen Verlauf auf und wird mit zunehmendem Vorsteuerdruck p_VS bis auf Null reduziert.

Die Ventilkennlinie V_WKV des Wandlerkupplungsventils WKV bzw. der Verlauf des Zulaufdrucks p_WK_zu der Wandlerüberbrückungskupplung 2 entspricht im Wesentlichen dem in Fig. 5 gezeigten stetigen Verlauf, da das Wandlerkupplungsventil WKV gemäß Fig. 6 im Wesentlichen den gleichen Aufbau wie das Wandlerkupplungsventil gemäß Fig. 4 aufweist.

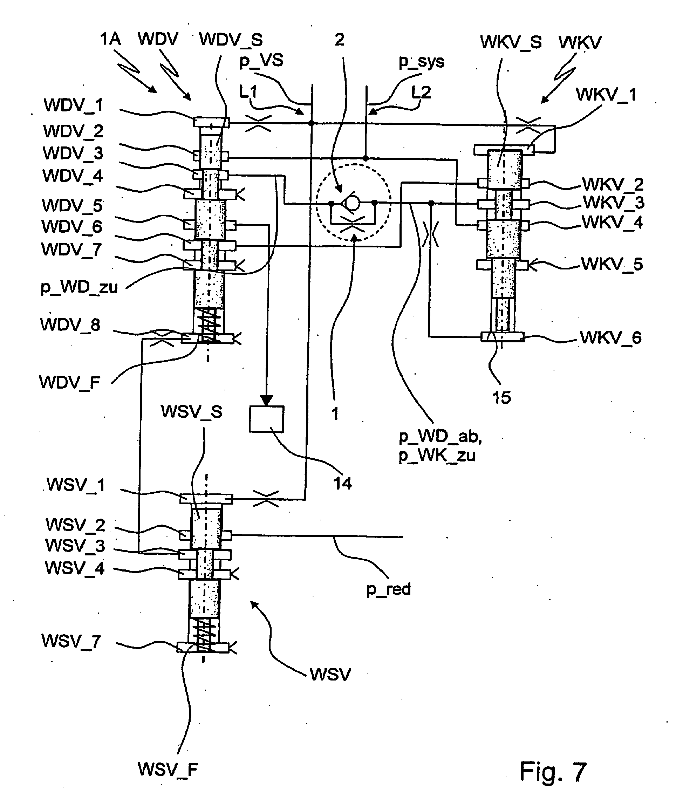

Fig. 7 zeigt ein viertes Ausführungsbeispiel eines erfindungsgemäß ausgebildeten Steuersystems 1A, welches ebenfalls wie das Steuersystem 1 A gemäß Fig. 6 mit einem Wandlerschaltventil WSV ausgeführt ist, wobei das Wandlerdruckventil WDV im Bereich des ersten Steuerraums WDV_1 direkt mit dem Vorsteuerdruck p_VS beaufschlagt wird, so dass das Steuersystem 1A gemäß Fig. 7 im Bereich des Wandlerschaltventils WSV ohne die in Fig. 6 dargestellte Abschaltung des Vorsteuerdrucks p_VS für das Wandlerdruckventil WDV ausgeführt ist. Die Ventilkennlinien V_WDV und V_WKV des Wandlerdruckventils WDV und des Wandlerkupplungsventils WKV des Steuersystems 1 gemäß Fig. 7 entsprechen im Wesentlichen den Ventilkennlinien V_WDV und V_WKV des Wandlerdruckventils WDV und des Wandlerkupplungsventils WKV des Steuersystems gemäß Fig. 6 und sind in Fig. 8 grafisch wiedergegeben.

Die Ventilkennlinie V_WDV des Wandlerdruckventils WDV gemäß Fig. 7 steht vor Erreichen des vordefinierten siebten Vorsteuerdruckwerts p_VS_6 des Vorsteuerdrucks p_VS in Abhängigkeit des an dem Wandlerschaltventil WVS anliegenden und in Richtung des Wandlerdruckventils WDV durchgeschalteten Drucksignals p_red, einer gleichgerichtet an dem Ventilschieber WDV_S des Wandlerdruckventils WDV angreifenden Federeinrichtung WDV_F und dem in Bezug auf die Federeinrichtung WDV_F in entgegengesetzter Richtung an dem Ventilschieber WDV_S des Wandlerdruckventils WDV wirkenden Vorsteuerdrucks p_VS, wobei sich der Zulaufdruck p_WD_zu gemäß der gepunketet ausgeführten Linie langsam absenkt. Ab Überschreiten des vordefinierten siebten Vorsteuerdruckwerts p_VS_6 des Vorsteuerdrucks p_VS steht die Ventilkennlinie V_WDV des Wändlerdruckventils WDV in Abhängigkeit des Vorsteuerdrucks p_VS und der entgegengesetzt zu dem Vorsteuerdruck p_VS an dem Ventilschieber WDV_S des Wandlerdruckventils WDV wirkenden Federeinrichtung WDV_F.

Die Ventilkennlinie V_WKV des Wandlerkupplungsventils WKV steht über dem gesamten Betriebsbereich des Steuersystems 1 in Abhängigkeit des am Ventilschieber WKV_S anliegenden Vorsteuerdrucks p_VS und in Bezug auf den Vorsteuerdruck p_VS in entgegengesetzter Richtung an der Wirkfläche 15 des Ventilschiebers WKV_S des Wandlerkupplungsventils WKV angreifenden Rücklaufdrucks p_WD_ab des Drehmomentwandlers bzw. des Zulaufdrucks p_WK_zu der Wandlerüberbrückungskupplung 2.

Grundsätzlich ist den beiden in Fig. 6 und Fig. 7 dargestellten Ausführungsbeispielen des Steuersystems 1A gemein, dass der Ventilschieber WSV_S des Wandlerschaltventils WSV entgegen der Federeinrichtung WSV_F derart mit dem Vorsteuerdruck p_VS beaufschlagbar ist und derart mit dem Wandlerdruckventil WDV wirkverbunden ist, dass der Zulaufdruck p_WK_zu der Wandlerüberbrückungskupplung 2 das vordefinierte Druckniveau p_0 spätestens zu einem Vorsteuerdruckwert p_VS (p_0) übersteigt, zu dem der Zulaufdruck p_WD_zu des Drehmomentwandlers 1 das vordefinierte Druckniveau p_0 unterschreitet.

Um die Übertragungsfähigkeit der Wandlerüberbrückungskupplung 2 auf einen einem herkömmlich ausgeführten Steuersystem entsprechenden Wert einstellen zu können, ohne den Zulaufdruck p_WK_zu der Wandlerüberbrückungskupplung zu erhöhen, wird der Zulaufdruck p_WD_zu des Drehmomentwandlers 1 kontinuierlich auf Null abgesenkt, nachdem der Zulaufdruck p_WK_zu der Wandlerüberbrückungskupplung 2 das vordefinierte Druckniveau p_0 überschritten hat.

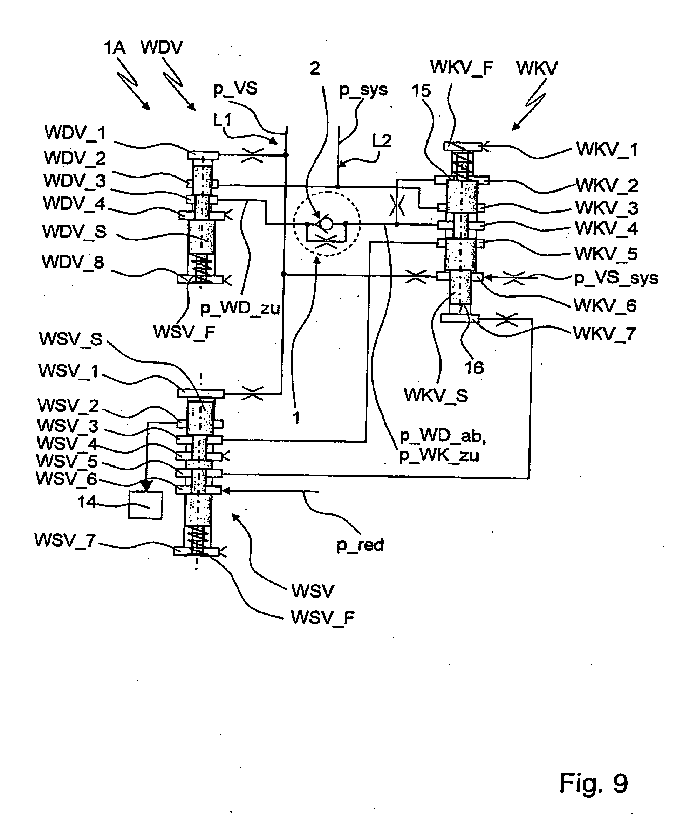

Ein fünftes Ausführungsbeispiel eines erfindungsgemäßen hydraulischen Steuersystems 1A ist in Form eines Schaltschemas in Fig. 9 gezeigt, welches wie die Ausführungsbeispiele des Steuersystems gemäß Fig. 6 und Fig. 7 mit einem Wandlerschaltventil WSV ausgeführt ist. Das Wandlerschaltventil WSV ist in derselben Art und Weise aufgebaut wie das Schaltventil WSV gemäß Fig. 6, wobei ein am Wandlerschaltventil WSV anliegendes Drucksignal p_red bei entsprechender Schaltstellung des Ventilschiebers WSV_S des Wandlerschaltventils WSV auf eine Stirnfläche 16 des Ventilschiebers WKV_S des Wandlerkupplungsventils WKV geführt wird.

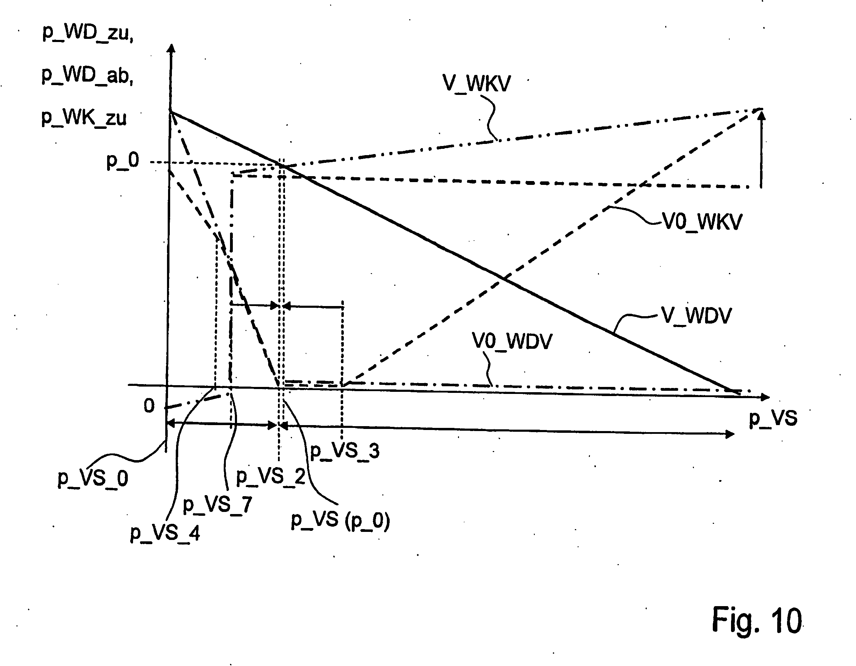

Der Ventilschieber WSV_S des Wandlerschaltventils WSV ist entgegen der Federeinrichtung WSV_F derart mit dem Vorsteuerdruck p_VS beaufschlagbar und derart mit dem Wandlerkupplungsventil WKV wirkverbunden, dass der Zulaufdruck p_WK_zu der Wandlerüberbrückungskupplung 2 das Druckniveau p_0 in der in Fig. 10 dargestellten Art und Weise spätestens zu einem Vorsteuerdruckwert p_VS (p_0) übersteigt, zu dem der Zulaufdruck p_WD_zu des Drehmomentwandlers 1 das vordefinierte Druckniveau p_0 unterschreitet.

Die Ventilkennlinie V_WKV des Wandlerkupplungsventils WKV steht vor Erreichen eines vordefinierten achten Vorsteuerdruckwerts p_VS_7 des Vorsteuerdrucks p_VS in Abhängigkeit einer an dem Ventilschieber WKV_S des Wandlerkupplungsventils WKV angreifenden Federeinrichtung WKV_F und dem zu der Federeinrichtung WKV_F gleichgerichtet an dem Ventilschieber WKV_S angreifenden Rücklaufdruck p_WD_ab des Drehmomentwandlers 1 bzw. des Zulaufdrucks p_WK_zu der Wandlerüberbrückungskupplung 2 sowie des in entgegengesetzter Richtung am Ventilschieber WKV_S des Wandlerkupplungsventils WKV angreifenden Vorsteuerdrucks p_VS.

Die Ventilkennlinie V_WKV des Wandlerkupplungsventils WKV steht ab Überschreiten des vordefinierten achten Vorsteuerdruckwerts p_VS_7 des Vorsteuerdrucks p_VS in Abhängigkeit des Vorsteuerdrucks p_VS, eines an dem Wandlerschaltventil WSV anliegenden und in Richtung des Wandlerkupplungsventils WKV durchgeschalteten sowie in Bezug auf den Vorsteuerdruck p_VS in gleicher Richtung an dem Ventilschieber WKV_S des Wandlerkupplungsventils WKV angreifenden Drucksignals p_red, der Federrate der Federeinrichtung WKV_F und des zu der Federeinrichtung WKV_F gleich wirkend an dem Ventilschieber WKV_S des Wandlerkupplungsventils WKV angreifenden Zulaufdrucks p_WK_zu der Wandlerüberbrückungskupplung 2.

Die Ventilkennlinie V_WDV des Wandlerdruckventils WDV steht über den gesamten Betriebsbereich des Drehmomentwandlers 1 in Abhängigkeit des am Ventilschieber WDV_S des Wandlerdruckventils WDV anliegenden Vorsteuerdrucks p_VS und der dem Vorsteuerdruck p_VS entgegenwirkenden Federrate der Federeinrichtung WDV_F.

Bei dem in Fig. 9 dargestellten Steuersystem 1A wird im Gegensatz zu dem in Fig. 6 und Fig. 7 dargestellten Ausführungsbeispielen des erfindungsgemäßen Steuersystems nicht der Zulaufdruck p_WD_zu des hydrodynamischen Drehmomentwandlers zu einem vordefinierten Vorsteuerdruckwert sprungartig reduziert, sondern der Zulaufdruck p_WK_zu der Wandlerüberbrückungskupplung zu dem vordefinierten achten Vorsteuerdruckwert p_VS_7 sprungartig derart angehoben und anschließend in Abhängigkeit des am Wandlerkupplungsventil WKV am sechsten Steuerraum WKV_6 anliegenden Vorsteuerdrucksignals mit steigendem Vorsteuerdruck p_VS konstant gehalten oder ansteigend dargestellt, so dass der Zulaufdruck p_WK_zu der Wandlerüberbrückungskupplung 2 das vordefinierte Druckniveau p_0 spätestens zu dem Vorsteuerdruckwert p_VS (p_0) übersteigt, zu dem der Zulaufdruck p_WD_zu des Drehmomentwandlers 1 das vordefinierte Druckniveau p_0 unterschreitet.

Mit dem in Fig. 9 dargestellten Steuersystem 1A ist ein höherer Fußpunktdruck des Drehmomentwandlers als bei den anderen Steuersystemen 1 A gemäß Fig. 2, Fig. 4, Fig. 6 und Fig. 7 einstellbar, womit absolut sichergestellt ist, dass im Drehmomentwandler 1 die die Funktionsweise des Drehmomentwandlers 1 und der Wandlerüberbrückungskupplung 2 beeinträchtigende Kavitation nicht im Drehmomentwandler 1 stattfindet. Des Weiteren wird die Übertragungsfähigkeit der Wandlerüberbrückungskupplung 2 bei dem in Fig. 9 dargestellten Steuersystem 1A dadurch auf dem Niveau eines herkömmlich ausgeführten Steuersystems eingestellt, dass der Zulaufdruck p_WK_zu der Wandlerüberbrückungskupplung 2 mit steigendem Vorsteuerdruck p_VS im Bereich des Wandlerkupplungsventils WKV erhöht wird, während der Zulaufdruck p_WD_zu des Drehmomentwandlers 1 im Bereich des Wandlerdruckventils WDV kontinuierlich auf Null abgesenkt wird. Die Übertragungsfähigkeit der Wandlerüberbrückungskupplung 2 ergibt sich damit wie bei den vorbeschriebenen weiteren Ausführungsbeispielen des Steuersystems 1 A ebenfalls aus den am Wandlerkupplungskolben 6 angreifenden Zulaufdrücken p_WD_zu und p_WK_zu sowie der Federrate der Federeinrichtung 7 der Wandlerüberbrückungskupplung 2.

Alternativ zu der Ansteuerung des Wandlerkupplungsventils WKV mit dem Vorsteuerdruck p_VS besteht auch die Möglichkeit, dass das Wandlerkupplungsventil mit einem konstanten Vorsteuerdruck, wie beispielsweise dem Vorsteuerdruck p_VS_sys des Systemsdrucks p_sys angesteuert wird, wobei der Zulaufdruck p_WK_zu der Wandlerüberbrückungskupplung dann in Abhängigkeit eines Motormoments einer Brennkraftmaschine eines Antriebstranges eines Fahrzeuges weiter angehoben werden kann.

### Bezugszeichen

- 1: hydrodynamischer Drehmomentwandler
- 1A: Steuersystem
- 2: geregelte Wandlerüberbrückungskupplung
- 3: Turbinenrad
- 4: Pumpenrad
- 5: Leitrad
- 6: Wandlerkupplungskolben
- 7: Federeinrichtung der Wandlerüberbrückungskupplung
- 8: Reibbelag
- 9: Gehäuse
- 10: weiterer Reibbelag
- 11: Druckbegrenzungsventil
- 12: Ventilplatte
- 13: Federeinrichtung des Druckbegrenzungsventils
- 14: Schmier- und Kühlkreislauf
- 15: Wirkfläche
- 16: Stirnfläche des Ventilschiebers des Wandlerkupplungsventils
- 17: Drossel
- 18: Wirkfläche
- L1, L2: Zuleitung,
- L3: Leitung
- p_red: Drucksignal
- p_sys: Systemdruck
- p_VS: Vorsteuerdruck
- p_YS_0 bis:
- p_VS_7: Vorsteuerdruckwert
- p_VS (p 0): Vorsteuerdruckwert
- p_VS-sys: Vorsteuerdruck
- p_WD_zu: Zulaufdruck Drehmomentwandler
- p_WD_ab: Rücklaufdruck des Drehmomentwandlers
- p_WK_zu: Zulaufdruck der Wandlerüberbrückungskupplung
- WDV: Wandlerdruckventil
- WDV_1 bis:
- WDV_8: Steuerraum
- WDV_F: Federeinrichtung
- WDV_S: Ventilschieber
- WKV: Wandlerkupplungsventil
- WKV_1 bis:
- WKV_6: Steuerraum
- WKV_F: Federeinrichtung
- WKV_S: Ventilschieber
- WSV: Wandlerschaltventil
- WSV_1 bis:
- WSV_7: Steuerraum
- WSV_F: Federeinrichtung
- WSV_S: Ventilschieber

## Patentansprüche

1. Hydraulisches Steuersystem (1A) für einen hydrodynamischen Drehmomentwandler (1) mit einer geregelten Wandlerüberbrückungskupplung (2) eines Automatgetriebes zum Steuern eines Zulaufdrucks (p_WD_zu) des Drehmomentwandlers (1) und eines Zulaufdruckdrucks (p_WK_zu) der Wandlerüberbrückungskupplung (2), wobei die Wandierüberbrückungskupplung (2) geschlossenen ist, wenn der Zulaufdruck (p_WD_zu) des Drehmomentwandlers (1) kleiner ist als ein vordefinierter Druckwert des Zulaufdruckes (p_WK_zu) der Wandlerüberbrückungskupplung (2), und wobei ein Wandlerdruckventil (WDV) zum Steuern des Zulaufdruckes (p_WD_zu) des Drehmomentwandlers (1) und ein Wandlerkupplungsventil (WKV) zum Steuern des Zulaufdruckes (p_WK_zu) der Wandlerüberbrückungskupplung (2) vorgesehen sind, deren Ventilschieber (WDV_S, WKV_S) mit wenigstens einem Vorsteuerdruck (p_VS) und einem Systemdruck (p_sys) beaufschlagbar sind, **dadurch gekennzeichnet, dass** der Ventilschieber (WKV_S) des Wandlerkupplungsventils (WKV) bei geöffneter Wandlerüberbrückungskupplung (2) an einer Wirkfläche (15) derart mit dem Rücklaufdruck (p_WD_ab) des Drehmomentwandlers (1) beaufschlagt ist und bei geschlossener Wandlerüberbrückungskupplung (2) an der Wirkfläche (15) derart mit dem Zulaufdruck (p_WK_zu) der Wandlerüberbrückungskupplung (2) beaufschlagt ist, dass über den gesamten Betriebsbereich des Drehmomentwandlers (1) wenigstens entweder der Zulaufdruck (p_WD_zu) des Drehmomentwandlers (1) oder der Zulaufdruck (p_WK_zu) der Wandlerüberbrückungskupplung (2) größer als ein vordefiniertes Druckniveau (p_0) ist.

2. Hydraulisches Steuersystem nach Anspruch 1, **dadurch gekennzeichnet, dass** sowohl der Zulaufdruck (p_WD_zu) des Drehmomentwandlers (1) als auch der Zulaufdruck (p_WK_zu) der Wandlerüberbrückungskupplung (2) über den gesamten Betriebsbereich des Drehmomentwandlers (1) über ein mit jeweils wenigstens einer Entlastungssteuerzunge (WKV_2, WDV_4) des Wandlerkupplungsventils (WKV) und/oder des Wandlerdruckventils (WDV) verbundenes Druckbegrenzungsventil (11) oberhalb des vordefinierten Druckniveaus (p_0) einstellbar ist.

3. Hydraulisches Steuersystem nach Anspruch 1 oder 2, **dadurch gekennzeichnet, dass** das Druckbegrenzungsventil (11) als Plattenventil ausgebildet ist, welches eine gegen den statischen Druck im hydrodynamischen Drehmomentwandler (1) angefederte Ventilplatte (12) aufweist.

4. Hydraulisches Steuersystem nach einem der Ansprüche 1 bis 3, **dadurch gekennzeichnet, dass** das Wandlerkupplungsventil (WKV) mit einer derartigen Ventilkennlinie (V_WKV) konfiguriert ist, dass ein Schließdruck der Wandlerüberbrückungskupplung (2), zu dem die Wandlerüberbrückungskupplung (2) vollständig geschlossen ist, gegenüber einem Schließdruck, der zum Bereitstellen der vollen Übertragungsfähigkeit der Wandlerüberbrückungskupplung (2) bei einem Zulaufdruck (p_WD_zu) des Drehmomentwandlers (1), welcher wenigstens annähernd Null ist, bei Anliegen des jeweils wenigstens annähernd selben Vorsteuerdruckwertes (p_VS) an dem Wandlerkupplungsventil (WKV) um das vordefinierte Druckniveau (p_0) erhöht ist.

5. Hydraulisches Steuersystem nach einem der Ansprüche 1 bis 4, **dadurch gekennzeichnet, dass** an dem Ventilschieber (WKV_S) des Wandlerkupplungsventils (WKV) und an dem Ventilschieber (WDV_S) des Wandlerdruckventils (WDV) jeweils eine dem anliegenden Vorsteuerdruck (p_VS) entgegenwirkende Federeinrichtung (WKV_F, WDV_F) angreift.

6. Hydraulisches Steuersystem nach Anspruch 5, **dadurch gekennzeichnet, dass** eine Ventilkennlinie (V_WDV) des Wandlerdruckventils (WDV) in Abhängigkeit des am Ventilschieber (WDV_S) anliegenden Vorsteuerdrucks (p_V5) und der Federrate der Federeinrichtung (WDV_F) des Wandlerdruckventils (WDV) sowie des am Ventilschiebers (WDV_S) des Wandlerdruckventils (WDV) angreifenden vordefinierten Druckniveaus (p_0) steht.

7. Hydraulisches Steuersystem nach Anspruch 5 oder 6, **dadurch gekennzeichnet, dass** die Ventilkennlinie (V_WKV) des Wandlerkupplungsventils (WKV) bei geöffneter Wandlerüberbrückungskupplung (2) in Abhängigkeit des Vorsteuerdrucks (p_VS) und eines in Bezug auf den Vorsteuerdruck (p_VS) entgegengesetzt am Ventilschieber (WKV_S) des Wandlerkupplungsventils (WKV) angreifenden Rücklaufdrucks (p_WD_ab) des Drehmomentwandlers (1) sowie der Federrate der Federeinrichtung (WKV_F) des Wandlerkupplungsventils (WKV) steht.

8. Hydraulisches Steuersystem nach einem der Ansprüche 5 bis 7, **dadurch gekennzeichnet, dass** die Ventilkennlinie (V_WKV) des Wandlerkupplungsventils (WKV) bei geschlossener Wandlerüberbrückcungskupplung (2) in Abhängigkeit des Vorsteuerdrucks (p_VS) und des in Bezug auf den Vorsteuerdruck (p_VS) entgegengesetzt am Ventilschieber (WKV_S) des Wandlerkupplungsventils (WKV) angreifenden Zulaufdrucks (p_WK_zu) der Wandlerüberbrückungskupplung (2) sowie der Federrate der Federeinrichtung (WKV_F) des Wandlerkupplungsventils (WKV) steht.

9. Hydraulisches Steuersystem nach Anspruch 1, **dadurch gekennzeichnet, dass** eine Ventilkennlinie (V_WKV) des Wandlerkupplungsventils (WKV) bei geöffneter Wandlerüberbrückungskupplung (2) derart in Abhängigkeit des Vorsteuerdrucks (p_VS) und eines in Bezug auf den Vorsteuerdruck (p_VS) entgegengesetzt am Ventilschieber (WKV_S) des Wandlerkupplungsventils (WKV) angreifenden Rücklaufdrucks (p_WD_ab) des Drehmomentwandlers (1) steht und bei geschlossener Wandlerüberbrückungskupplung (2) derart in Abhängigkeit des Vorsteuerdrucks (p_VS) und des dem Vorsteuerdruck (p_VS) entgegengesetzt am Ventilschieber (WKV_S) des Wandlerkupplungsventils (WKV) angreifenden Zulaufdrucks (p_WK_zu) der Wandlerüberbrückungskupplung (2) steht, dass der Zulaufdruck (p_WK zu) der Wandlerüberbrückungskupplung (2) das vordefinierte Druckniveau (p_0) spätestens zu einem Vorsteuerdruckwert (p_VS (p_0)) übersteigt, zu dem der Zulaufdruck (p_WD_zu) des Drehmomentwandlers 1 das vordefinierte Druckniveau (p_0) unterschreitet.

10. Hydraulisches Steuersystem nach Anspruch 9, **dadurch gekennzeichnet, dass** die Ventilkennlinie (V_WDV) des Wandlerdruckventils (WDV) derart in Abhängigkeit des Vorsteuerdrucks (p_VS) und einer Federrate einer in entgegensetzter Richtung zu dem Vorsteuerdruck (p_VS) an dem Ventilschieber (WDV_S) des Wandlerdruckventils (WDV) angreifenden Federeinrichtung (WDV_F) steht, dass der Zulaufdruck (p_WK_zu) der Wandlerüberbrückungskupplung (2) das vordefinierte Druckniveau (p_0) spätestens zu einem Vorsteuerdruckwert (p_vs (p_0)) übersteigt, zu dem der Zulaufdruck (p_WD_zu) des Drehmomentwandlers (1) das vordefinierte Druckniveau (p_0) unterschreitet.

11. Hydraulisches Steuersystem nach Anspruch 1, **dadurch gekennzeichnet, dass** ein Wandlerschaltventil (WSV) vorgesehen ist, dessen Ventilschieber (WSV_S) entgegen einer Federeinrichtung (WSV_F) derart mit dem Vorsteuerdruck (p_VS) beaufschlagbar ist und derart mit dem Wandlerdruckventil (WDV) wirkverbunden ist, dass der Zulaufdruck (p_WK_zu) der Wandlerüberbrückungskupplung (2) das vordefinierte Druckniveau (p_0) spätestens zu einem Vorsteuerdruckwert (p_VS (p_0)) übersteigt, zu dem der Zulaufdruck (p_WD_zu) des Drehmomentwandlers (1) das vordefinierte Druckniveau (p_0) unterschreitet.

12. Hydraulisches Steuersystem nach Anspruch 11, **dadurch gekennzeichnet, dass** eine Ventilkennlinie (V_WDV) des Wandlerdruckventils (WDV) vor Erreichen eines vordefinierten Druckwertes (p_VS_6) des Vorsteuerdrucks (p_VS) in Abhängigkeit eines an dem Wandterschaltventil (WSV) anliegenden und in Richtung des Wandlerdruckventils (WDV) durchgeschalteten Drucksignals (p_red) und einer gleichgerichtet zu dem Drucksignal (p_red) an dem Ventilschieber (WDV_S) des Wandlerdruckventils (WDV) angreifenden Federeinrichtung (WDV_F) steht.

13. Hydraulisches Steuersystem nach Anspruch 12, **dadurch gekennzeichnet, dass** die Ventilkennlinie (V_WDV) des Wandlerdruckventils (WDV) ab Überschreiten des vordefinierten Druckwerts (p_VS_6) des Vorsteuerdrucks (p_VS) in Abhängigkeit des Vorsteuerdrucks (p_VS) und der entgegengesetzt zu dem Vorsteuerdruck (p_VS) an dem Ventilschieber (WDV_S) des Wandlerdruckventils (WDV) wirkenden Federeinrichtung (WDV_F) steht.

14. Hydraulisches Steuersystem nach Anspruch 11, **dadurch gekennzeichnet, dass** eine Ventilkennlinie (V_WDV) des Wandlerdruckventils (WDV) vor Erreichen eines vordefinierten Druckwerts (p_VS_6) des Vorsteuerdrucks (p_VS) in Abhängigkeit eines an dem Wandlerschaltventil (WSV) anliegenden und in Richtung des Wandlerdruckventils (WDV) durchgeschalteten Drucksignals (p_red), einer gleichgerichtet an dem Ventilschieber (WDV_S) des Wandlerdruckventils (WDV) angreifenden Federeinrichtung (WDV F) und dem in Bezug auf die Federeinrichtung (WDV_F) in entgegen gesetzter Richtung an dem Ventilschieber (WDV_S) des Wandlerdruckventils (WDV) wirkenden Vorsteuerdruck (p_VS) steht.

15. Hydraulisches Steuersystem nach Anspruch 14, **dadurch gekennzeichnet, dass** die Ventilkennlinie (V_WDV) des Wandlerdruckventils (WDV) ab Überschreiten des vordefinierten Druckwerts (p_VS_6) des Vorsteuerdrucks (p_VS) in Abhängigkeit des Vorsteuerdrucks (p_VS) und der entgegengesetzt zu dem Vorsteuerdruck (p_VS) an dem Ventilschieber (WDV_S) des Wandlerdruckventils (WDV) wirkenden Federeinrichtung (WDV_F) steht.

16. Hydraulisches Steuersystem nach einem der Ansprüche 11 bis 15, **dadurch gekennzeichnet, dass** eine Ventilkennlinie (V_WKV) des Wandlerkupplungsventils (WKV) in Abhängigkeit des Vorsteuerdrucks (p_VS) und eines zu dem Vorsteuerdruck (p_VS) entgegengesetzt am Ventilschieber (WKV_S) des Wandtericupplungsventils (WKV) angreifenden Zulaufdrucks (p_WK_zu) der Wandlerüberbrückungskupplung (2) steht.

17. Hydraulisches Steuersystem nach Anspruch 1, **dadurch gekennzeichnet, dass** ein Wandlerschaltventil (WSV) vorgesehen ist, dessen Ventilschieber (WSV_S) entgegen einer Federeinrichtung (WSV_F) derart mit dem Vorsteuerdruck (p_VS) beaufschlagbar ist und derart mit dem Wandlerkupplungsventil (WKV) wirkverbunden ist, dass der Zulaufdruck (p_WK_zu) der Wandlerüberbrückungskupplung (2) das vordefinierte Druckniveau (p_0) spätestens zu einem Vorsteuerdruckwert (p_VS (p_0)) übersteigt, zu dem der Zulaufdruck (p_WD_zu) des Drehmomentwandlers (1) das vordefinierte Druckniveau (p_0) unterschreitet.

18. Hydraulisches Steuersystem nach Anspruch 17, **dadurch gekennzeichnet, dass** eine Ventilkennlinie (V_WKV) des Wandlerkupplungsventils (WKV vor Erreichen eines vordefinierten Druckwerts (p_VS_9) des Vorsteuerdrucks (p_VS) in Abhängigkeit einer an dem Ventilschieber (WKV_S) des Wandlerkupplungsventils (WKV) angreifenden Federeinrichtung (WKV_F) und dem zu der Federeinrichtung (WKV F) gleich gerichtet an dem Ventilschieber (WKV_S) des Wandlerkupplungsventils (WKV) angreifenden Rücklaufdruck (p_WD_ab) des Drehmomentwandlers (1) sowie des in entgegen gesetzter Richtung am Ventilschieber (WKV_S) des Wandlerkupplungsventils (WKV) angreifenden Vorsteuerdrucks (p_VS) steht.

19. Hydraulisches Steuersystem nach Anspruch 18, **dadurch gekennzeichnet, dass** die Ventilkennlinie (V_WKV) des Wandlerkupplungsventils (WKV) ab Überschreiten des vordefinierten Druckwerts (p_VS_7) des Vorsteuerdrucks (p_VS) in Abhängigkeit des Vorsteuerdrucks (p_VS), eines an dem Wandlerschaltventil (WSV) anliegenden und in Richtung des Wandlerkupplungsventils (WKV) durchgeschalteten sowie in Bezug auf den Vorsteuerdruck (p_VS) in gleicher Richtung an dem Ventilschieber (WKV_S) des Wandlerkupplungsventils (WKV) angreifenden Drucksignals (p_red), der Federrate der Federeinrichtung (WKV_F) und des zu der Federeinrichtung (WKV_F) gleichwirkend an dem Ventilschieber (WKV_S) des Wandlerkupplungsventils (WKV) angreifenden Zulaufdrucks (p_WK_zu) der Wandlerüberbrückungskupplung (2) steht.

20. Hydraulisches Steuersystem nach einem der Ansprüche 17 bis 19, **dadurch gekennzeichnet, dass** eine Ventilkennlinie (V_WDV) des Wandlerdruckventils (WDV) in Abhängigkeit des am Ventilschieber (WDV_S) des Wandlerdruckventils (WDV) anliegenden Vorsteuerdrucks (p_VS) und einer dem Vorsteuerdruck (p_VS) entgegenwirkenden Federrate einer Federeinrichtung (WDV_F) steht.

21. Hydraulisches Steuersystem nach Anspruch 19 oder 20, **dadurch gekennzeichnet, dass** das Drucksignal (p_red) einem über ein Druckreduzierventil konstant eingestelltem Vorsteuerdruckwert (p_VS) oder einem Vorsteuerdruck (p_VS_sys) eines weiteren Drucksteuerventils entspricht, welcher zur Ansteuerung eines Systemdruckventils und somit zum Einstellen des Systemdrucks (p_sys) vorgesehen ist.

## Claims

1. Hydraulic control system (1A) for a hydrodynamic torque converter (1) having a regulated converter locking clutch (2) of an automatic transmission, for the control of an inflow pressure (p_WD_zu) of the torque converter (1) and of an inflow pressure (p_WK_zu) of the converter locking clutch (2), the converter locking clutch (2) being closed when the inflow pressure (p_WD_zu) of the torque converter (1) is lower than the predefined pressure value of the inflow pressure (p_WK_zu) of the converter locking clutch (2), and a converter pressure valve (WDV) for controlling the inflow pressure (p_WD_zu) of the torque converter (1) and a converter clutch valve (WKV) for controlling the inflow pressure (p_WK_zu) of the converter locking clutch (2) being provided, the valve slides (WDV_S, WKV_S) of which can be acted upon with at least one pilot control pressure (p_VS) and a system pressure (p_sys), **characterized in that** the valve slide (WKV_S) of the converter clutch valve (WKV), with the converter locking clutch (2) open, is acted upon on an operating surface (15) with the return pressure (p_WD_ab) of the torque converter (1) in such a way and with a converter locking clutch (2) closed, is acted upon on the operating surface (15) with the inflow pressure (p_WK_zu) of the converter locking clutch (2) in such a way that, over the entire operating range of the torque converter (1), at least either the inflow pressure (p_WD_zu) of the torque converter (1) or the inflow pressure (p_WK_zu) of the converter locking clutch (2) is higher than a predefined pressure level (P_0).

2. Hydraulic control system according to Claim 1, **characterized in that** both the inflow pressure (p_WD_zu) of the torque converter (1) and the inflow pressure (p_WK_zu) of the converter locking clutch (2) can be set above the predefined pressure level (p_0), over the entire operating range of the torque converter (1), via a pressure-limiting valve (11) connected in each case to at least one relief control tongue (WKV_2, WDV_4) of the converter clutch valve (WKV) and/or of the converter pressure valve (WDV).

3. Hydraulic control system according to Claim 1 or 2, **characterized in that** the pressure-limiting valve (11) is designed as a plate valve which has a valve plate (12) sprung counter to the static pressure in the hydrodynamic torque converter (1).

4. Hydraulic control system according to one of Claims 1 to 3, **characterized in that** the converter clutch valve (WKV) is configured with a valve characteristic curve (V_WKV) such that a closing pressure of the converter locking clutch (2), at which the converter locking clutch (2) is completely closed, is increased by the amount of the predefined pressure level (p_0), as compared with a closing pressure for providing the full transmission capacity of the converter locking clutch (2) under the inflow pressure (p_WD_zu) of the torque converter (1) which is at least approximately zero, when in each case at least approximately the same pilot control pressure value (p_VS) prevails at the converter clutch valve (WKV).

5. Hydraulic control system according to one of Claims 1 to 4, **characterized in that** in each case a spring device (WKV_F, WDV_F) counteracting the prevailing pilot control pressure (p_VS) acts on the valve slide (WKV_S) of the converter clutch valve (WKV) and on the valve slide (WDV_S) of the converter pressure valve (WDV).

6. Hydraulic control system according to Claim 5, **characterized in that** a valve characteristic curve (V_WDV) of the converter pressure valve (WDV) is in dependence on the pilot control pressure (p_VS) prevailing at the valve slide (WDV_S) and on the spring constant of the spring device (WDV_F) of the converter pressure valve (WDV) and also on the predefined pressure level (p_0) acting on the valve slide (WDV_S) of the converter pressure valve (WDV).

7. Hydraulic control system according to Claim 5 or 6, **characterized in that,** with the converter locking clutch (2) open, the valve characteristic curve (V_WKV) of the converter clutch valve (WKV) is in dependence on the pilot control pressure (p_VS) and on a return pressure (p_WD_ab) of the torque converter (1), acting on the valve slide (WKV_S) of the converter clutch valve (WKV) opposite to the pilot control pressure (p_VS), and also on the spring constant of the spring device (WKV_F) of the converter clutch valve (WKV).

8. Hydraulic control system according to one of Claims 5 to 7, **characterized in that,** with the converter locking clutch (2) closed, the valve characteristic curve (V_WKV) of the converter clutch valve (WKV) is in dependence on the pilot control pressure (p_VS) and on the inflow pressure (p_WK_zu) of the converter locking clutch (2), acting on the valve slide (WKV_S) of the converter clutch valve (WKV) opposite to the pilot control pressure (p_VS), and also on the spring constant of the spring device (WKV_F) of the converter clutch valve (WKV).

9. Hydraulic control system according to Claim 1, **characterized in that** a valve characteristic curve (V_WKV) of the converter clutch valve (WKV) is independent, with the converter locking clutch (2) open, on the pilot control pressure (p_VS) and on a return pressure (p_MD_ab) of the torque converter (1), acting on the valve slide (WKV_S) of the converter clutch valve (WKV) opposite to the pilot control pressure (p_VS), in such a way and is independent, with the converter locking clutch (2) closed, on the pilot control pressure (p_VS) and on the inflow pressure (p_WK_zu) of the converter locking clutch (2), acting on the valve slide (WKV S) of the converter clutch valve (WKV) opposite to the pilot control pressure (p_VS), in such a way that the inflow pressure (p_WK_zu) of the converter locking clutch (2) overshoots the predefined pressure level (p_0) at the latest at a pilot control pressure value (p_VS (p_0)) at which the inflow pressure (p_WD_zu) of the torque converter (1) undershoots the predefined pressure level (p_0).

10. Hydraulic control system according to Claim 9, **characterized in that** the valve characteristic curve (V_WDV) of the converter pressure valve (WDV) is in dependence on the pilot control pressure (p_VS) and on a spring constant of a spring device (WDV_F) acting on the valve slide (WDV_S) of the converter pressure valve (WDV) in the opposite direction to the pilot control pressure (p_VS), in such a way that the inflow pressure (p_WK_zu) of the converter locking clutch (2) overshoots the predefined pressure level (p_0) at the latest at a pilot control pressure value (p_VS (p_0)) at which the inflow pressure (p_WD_zu) of the torque converter (1) undershoots the predefined pressure level (p_0).

11. Hydraulic control system according to Claim 1, **characterized in that** a converter switching valve (WSV) is provided, the valve slide (WSV_S) of which can be acted upon with the pilot control pressure (p_VS) counter to a spring device (WSV_F) in such a way and is operatively connected to the converter pressure valve (WDV) in such a way that the inflow pressure (p_WK_zu) of the converter locking clutch (2) overshoots the predefined pressure level (p_0) at the latest at a pilot control pressure value (p_VS (p_0)) at which the inflow pressure (p_WD_zu) of the torque converter (1) undershoots the predefined pressure level (p_0).

12. Hydraulic control system according to Claim 11, **characterized in that,** before a predefined pressure value (p_VS_6) of the pilot control pressure (p_VS) is reached, a valve characteristic curve (V_WDV) of the converter pressure valve (WDV) is in dependence on a pressure signal (p_red) prevailing at the converter switching valve (WSV) and switched through in the direction of the converter pressure valve (WDV), and on a spring device (WDV_F) acting on the valve slide (WDV_S) of the converter pressure valve (WDV) codirectionally with the pressure signal (p_red).

13. Hydraulic control system according to Claim 12, **characterized in that**, from the overshooting of the predefined pressure value (p_VS_6) of the pilot control pressure (p_VS), the valve characteristic curve (V_WDV) of the converter pressure valve (WDV) is in dependence on the pilot control pressure (p_VS) and on the spring device (WDV_F) acting on the valve slide (WDV_S) of the converter pressure valve (WDV) opposite to the pilot control pressure (p_VS).

14. Hydraulic control system according to Claim 11, **characterized in that**, before a predefined pressure value (p_VS_6) of the pilot control pressure (p_VS) is reached, a valve characteristic curve (V_WDV) of the converter pressure valve (WDV) is in dependence on a pressure signal (p_red) prevailing at the converter switching valve (WSV) and switched through in the direction of the converter pressure valve (WDV), on a spring device (WDV_F) acting codirectionally on the valve slide (WDV_S) of the converter pressure valve (WDV), and on the pilot control pressure (p_VS) acting on the valve slide (WDV_S) of the converter pressure valve (WDV) in the opposite direction to the spring device (WDV_F).

15. Hydraulic control system according to Claim 14, **characterized in that**, from the overshooting of the predefined pressure value (p_VS_6) of the pilot control pressure (p_VS), the valve characteristic curve (V_WDV) of the converter pressure valve (WDV) is in dependence on the pilot control pressure (p_VS) and on the spring device (WDV_F) acting on the valve slide (WDV_S) of the converter pressure valve (WDV) opposite to the pilot control pressure (p_VS).

16. Hydraulic control system according to one of Claims 11 to 15, **characterized in that** a valve characteristic curve (V_WKV) of the converter clutch valve (WKV) is in dependence on the pilot control pressure (p_VS) and on an inflow pressure (p_WK_zu) of the converter locking clutch (2), acting on the valve slide (WKV_S) of the converter clutch valve (WKV) opposite to the pilot control pressure (p_VS).

17. Hydraulic control system according to Claim 1, **characterized in that** a converter switching valve (WSV) is provided, the valve slide (WSV_S) of which can be acted upon with a pilot control pressure (p_VS) counter to a spring device (WSV_F) in such a way and is operatively connected to the converter clutch valve (WKV) in such a way that the inflow pressure (p_WK_zu) of the converter locking clutch (2) overshoots the predefined pressure level (p_0) at the latest at a pilot control pressure value (p_VS (p_0)) at which the inflow pressure (p_WD_zu) of the torque converter (1) undershoots the predefined pressure level (p_0).

18. Hydraulic control system according to Claim 17, **characterized in that,** before a predefined pressure value (p_VS_9) of the pilot control pressure (p_VS) is reached, a valve characteristic curve (V_NKV) of the converter clutch valve (WKV) is in dependence on a spring device (WKV_F) acting on the valve slide (WKV_S) of the converter clutch valve (WKV) and on the return pressure (p_WD_ab) of the torque converter (1), acting on the valve slide (WKV_S) of the converter clutch valve (WKV) codirectionally with the spring device (WKV_F), and also on the pilot control pressure (p_VS) acting on the valve slide (WKV_S) of the converter clutch valve (WKV) in the opposite direction.

19. Hydraulic control system according to Claim 18, **characterized in that,** from the overshooting of the predefined pressure value (p_VS_7) of the pilot control pressure (p_VS), the valve characteristic curve (V_WKV) of the converter clutch valve (WKV) is in dependence on the pilot control pressure (p_VS), of a pressure signal (p_red) which prevails at the converter switching valve (WSV), is switched through in the direction of the converter clutch valve (WKV) and acts on the valve slide (WKV_S) of the converter clutch valve (WKV) in the same direction with respect to the pilot control pressure (p_VS), on the spring constant of the spring device (WKV_F) and on the inflow pressure (p_WK_zu) of the converter locking clutch (2), acting on the valve slide (WKV_S) of the converter clutch valve (WKV) with the same effect as the spring device (WKV_F).

20. Hydraulic control system according to one of Claims 17 to 19, **characterized in that** a valve characteristic curve (V_WDV) of the converter pressure valve (WDV) is in dependence on the pilot control pressure (p_VS) prevailing at the valve slide (WDV_S) of the converter pressure valve (WDV) and on a spring constant, counteracting the pilot control pressure (p_VS), of a spring device (WDV_F).

21. Hydraulic control system according to Claim 19 or 20, **characterized in that** the pressure signal (p_red) corresponds to a pilot control pressure value (p_VS) set constantly via a pressure-reducing valve or to a pilot control pressure (p_VS_sys) of a further pressure control valve which is provided for controlling a system pressure valve and therefore for setting the system pressure (p_sys).

## Revendications

1. Système de commande hydraulique (1A) pour un convertisseur de couple hydrodynamique (1) comprenant un embrayage de pontage de convertisseur asservi (2) d'une boîte de vitesses automatique pour commander une pression d'entrée (p_WD_zu) du convertisseur de couple (1) et une pression d'entrée (p_WK_zu) de l'embrayage de pontage de convertisseur (2), l'embrayage de pontage de convertisseur (2) étant fermé lorsque la pression d'entrée (p_WD_zu) du convertisseur de couple (1) est inférieure à une valeur de pression prédéterminée de la pression d'entrée (p_WK_zu) de l'embrayage de pontage de convertisseur (2), et une soupape de pression de convertisseur (WDV) pour la commande de la pression d'entrée (p_WD_zu) du convertisseur de couple (1) et une soupape d'embrayage de convertisseur (WKV) pour la commande de la pression d'entrée (p_WK_zu) de l'embrayage de pontage de convertisseur (2) étant prévues, leurs tiroirs de soupape (WDV_S, WKV_S) pouvant être sollicités avec au moins une pression de pré-commande (p_VS) et une pression de système (p_sys), **caractérisé en ce que** le tiroir de soupape (WKV_S) de la soupape d'embrayage de convertisseur (WKV), lorsque l'embrayage de pontage de convertisseur (2) est ouvert, est sollicité au niveau d'une surface fonctionnelle (15) avec la pression de retour (p_WD_ab) du convertisseur de couple (1), et lorsque l'embrayage de pontage de convertisseur (2) est fermé, est sollicité au niveau de la surface fonctionnelle (15) avec la pression d'entrée (p_WK_zu) de l'embrayage de pontage de convertisseur (2), de telle sorte que sur toute la plage de fonctionnement du convertisseur de couple (1), au moins soit la pression d'entrée (p_WD_zu) du convertisseur de couple (1), soit la pression d'entrée (p_WK_zu) de l'embrayage de pontage du convertisseur (2) soit supérieure à un niveau de pression prédéterminé (p_0).

2. Système de commande hydraulique selon la revendication 1, **caractérisé en ce que** la pression d'entrée (p_WD_zu) du convertisseur de couple (1) ainsi que la pression d'entrée (p_WK_zu) de l'embrayage de pontage de convertisseur (2) peuvent être ajustées au-dessus du niveau de pression prédéfini (p_0) sur toute la plage de fonctionnement du convertisseur de couple (1) par le biais d'une soupape de limitation de pression (11) connectée à chaque fois au moins à une langue de commande de décharge (WKV_2, WDV_4) de la soupape d'embrayage de convertisseur (WKV) et/ou de la soupape de pression de convertisseur (WDV).

3. Système de commande hydraulique selon la revendication 1 ou 2, **caractérisé en ce que** la soupape de limitation de pression (11) est réalisée sous forme de soupape à plateau, qui présente un plateau de soupape (12) sollicité par ressort à l'encontre de la pression statique dans le convertisseur de couple hydrodynamique (1).

4. Système de commande hydraulique selon l'une quelconque des revendications 1 à 3, **caractérisé en ce que** la soupape d'embrayage de convertisseur (WKV) est configurée avec une caractéristique de soupape (V_WKV) telle qu'une pression de fermeture de l'embrayage de pontage de convertisseur (2), à laquelle l'embrayage de pontage de convertisseur (2) est complètement fermé, soit augmentée du niveau de pression prédéfini (p_0) par rapport à une pression de fermeture pour fournir la capacité totale de transfert de l'embrayage de pontage de convertisseur (2) à une pression d'entrée (p_WD_zu) du convertisseur de couple (1) qui est au moins approximativement nulle, lors de l'application de la valeur de pression de précommande (p_VS) respective au moins approximativement identique à la soupape d'embrayage de convertisseur (WKV).

5. Système de commande hydraulique selon l'une quelconque des revendications 1 à 4, **caractérisé en ce qu'**un dispositif de ressort respectif (WKV_F, WDV_F) agissant à l'encontre de la pression de pré-commande appliquée (p_VS) vient en prise sur le tiroir de soupape (WKV_S) de la soupape d'embrayage de convertisseur (WKV) et sur le tiroir de soupape (WDV_S) de la soupape de pression de convertisseur (WDV).

6. Système de commande hydraulique selon la revendication 5, **caractérisé en ce qu'**une caractéristique de soupape (V_WDV) de la soupape de pression de convertisseur (WDV) est fonction de la pression de pré-commande (p_VS) appliquée au tiroir de soupape (WDV_S) et de la constante de ressort du dispositif de ressort (WDV_F) de la soupape de pression de convertisseur (WDV) ainsi que du niveau de pression (p_0) prédéfini s'appliquant sur le tiroir de soupape (WDV_S) de la soupape de pression de convertisseur (WDV).

7. Système de commande hydraulique selon la revendication 5 ou 6, **caractérisé en ce que** la caractéristique de soupape (V_WKV) de la soupape d'embrayage de convertisseur (WKV), lorsque l'embrayage de pontage de convertisseur (2) est ouvert, est fonction de la pression de pré-commande (p_VS) et d'une pression de retour (p_WD_ab) du convertisseur de couple (1) agissant à l'encontre de la pression de pré-commande (p_VS) sur le tiroir de soupape (WKV_S) de la soupape d'embrayage de convertisseur (WKV) ainsi que de la constante de ressort du dispositif de ressort (WKV_F) de la soupape d'embrayage de convertisseur (WKV).

8. Système de commande hydraulique selon l'une quelconque des revendications 5 à 7, **caractérisé en ce que** la caractéristique de soupape (V_WKV) de la soupape d'embrayage de convertisseur (WKV), lorsque l'embrayage de pontage de convertisseur (2) est fermé, est fonction de la pression de pré-commande (p_VS) et de la pression d'entrée (p_WK_zu) de l'embrayage de pontage de convertisseur (2) agissant à l'encontre de la pression de précommande (p_VS) sur le tiroir de soupape (WKV_S) de la soupape d'embrayage de convertisseur (WKV) ainsi que de la constante de ressort du dispositif de ressort (WKV_F) de la soupape d'embrayage de convertisseur (WKV).

9. Système de commande hydraulique selon la revendication 1, **caractérisé en ce qu'**une caractéristique de soupape (V_WKV) de la soupape d'embrayage de convertisseur (WKV), lorsque l'embrayage de pontage de convertisseur (2) est ouvert, est fonction de la pression de pré-commande (p_VS) et d'une pression de retour (p_WD_ab) du convertisseur de couple (1) agissant à l'encontre de la pression de pré-commande (p_VS) sur le tiroir de soupape (WKV_S) de la soupape d'embrayage de convertisseur (WKV), et, lorsque l'embrayage de pontage de convertisseur (2) est fermé, est fonction de la pression de pré-commande (p_VS) et de la pression d'entrée (p_WK_zu) de l'embrayage de pontage de convertisseur (2) agissant à l'encontre de la pression de pré-commande (p_VS) sur le tiroir de soupape (WKV_S) de la soupape d'embrayage de convertisseur (WKV), de telle sorte que la pression d'entrée (p_WK_zu) de l'embrayage de pontage de convertisseur (2) dépasse le niveau de pression prédéfini (p_0) au plus tard à une valeur de pression de pré-commande (p_VS(p_0)) à laquelle la pression d'entrée (p_WD_zu) du convertisseur de couple (1) est inférieure au niveau de pression prédéfini (p_0).

10. Système de commande hydraulique selon la revendication 9, **caractérisé en ce que** la caractéristique de soupape (V_WDV) de la soupape de pression de convertisseur (WDV) est fonction de la pression de pré-commande (p_VS) et d'une constante de ressort d'un dispositif de ressort (WDV_F) agissant dans la direction opposée à la pression de pré-commande (p_VS) sur le tiroir de soupape (WDV_S) de la soupape de pression de convertisseur (WDV), de telle sorte que la pression d'entrée (p_WK_zu) de l'embrayage de pontage de convertisseur (2) dépasse le niveau de pression prédéfini (p_0) au plus tard à une valeur de pression de pré-commande (p_VS_(p_0)) à laquelle la pression d'entrée (p_WD_zu) du convertisseur de couple (1) est inférieure au niveau de pression prédéfini (p_0).

11. Système de commande hydraulique selon la revendication 1, **caractérisé en ce que** l'on prévoit une soupape de commutation de convertisseur (WSV) dont le tiroir de soupape (WSV_S) peut être sollicité à l'encontre d'un dispositif de ressort (WSV_F) avec la pression de pré-commande (p_VS), et est en liaison fonctionnelle avec la soupape de pression de convertisseur (WDV) de telle sorte que la pression d'entrée (p_WK_zu) de l'embrayage de pontage de convertisseur (2) dépasse le niveau de pression prédéfini (p_0) au plus tard à une valeur de pression de pré-commande (p_VS(p_0)) à laquelle la pression d'entrée (p_WD_zu) du convertisseur de couple (1) est inférieure au niveau de pression prédéfini (p_0).

12. Système de commande hydraulique selon la revendication 11, **caractérisé en ce qu'**une caractéristique de soupape (V_MDV) de la soupape de pression de convertisseur (WDV), avant d'atteindre une valeur de pression prédéfinie (p_VS_6) de la pression de pré-commande (p_VS), est fonction d'un signal de pression (p_red) s'appliquant à la soupape de commutation de convertisseur (WSV) et commuté dans la direction de la soupape de pression de convertisseur (WDV) et d'un dispositif de ressort (WDV_F) orienté dans le même sens que le signal de pression (p_red) et venant en prise sur le tiroir de soupape (WDV_S) de la soupape de pression de convertisseur (WDV).

13. Système de commande hydraulique selon la revendication 12, **caractérisé en ce que** la caractéristique de soupape (V_WDV) de la soupape de pression de convertisseur (WDV), à partir du dépassement de la valeur de pression prédéfinie (p_VS_6) de la pression de pré-commande (p_VS), est fonction de la pression de pré-commande (p-VS) et du dispositif de ressort (WDV_F) agissant à l'encontre de la pression de pré-commande (p_VS) sur le tiroir de soupape (WDV_S) de la soupape de pression de convertisseur (WDV).

14. Système de commande hydraulique selon la revendication 11, **caractérisé en ce qu'**une caractéristique de soupape (V_WDV) de la soupape de pression de convertisseur (WDV), avant d'atteindre une valeur de pression prédéfinie (p_VS_6) de la pression de pré-commande (p_VS), est fonction d'un signal de pression (p_red) s'appliquant à la soupape de commutation de convertisseur (WSV) et commuté dans la direction de la soupape de pression de convertisseur (WDV), d'un dispositif de ressort (WDV_F) agissant dans le même sens sur le tiroir de soupape (WDV_S) de la soupape de pression de convertisseur (WDV) et de la pression de pré-commande (p_VS) agissant par rapport au dispositif de ressort (WDV_F) dans la direction opposée sur le tiroir de soupape (WDV_S) de la soupape de pression de convertisseur (WDV).

15. Système de commande hydraulique selon la revendication 14, **caractérisé en ce que** la caractéristique de soupape (V_WDV) de la soupape de pression de convertisseur (WDV), à partir du dépassement de la valeur de pression prédéfinie (p_VS_6) de la pression de pré-commande (p_VS), est fonction de la pression de pré-commande (p_VS) et du dispositif de ressort (WDV_F) agissant à l'encontre de la pression de pré-commande (p_VS) sur le tiroir de soupape (WDV_S) de la soupape de pression de convertisseur (WDV).

16. Système de commande hydraulique selon l'une quelconque des revendications 11 à 15, **caractérisé en ce qu'**une caractéristique de soupape (V_WKV) de la soupape d'embrayage de convertisseur (WKV) est fonction de la pression de pré-commande (p_VS) et d'une pression d'entrée (p_WK_zu) de l'embrayage de pontage de convertisseur (2) s'appliquant à l'encontre de la pression de pré-commande (p_VS) sur le tiroir de soupape (WKV_S) de la soupape d'embrayage de convertisseur (WKV).

17. Système de commande hydraulique selon la revendication 1, **caractérisé en ce qu'**il est prévu une soupape de commutation de convertisseur (WSV) dont le tiroir de soupape (WSV_S) peut être sollicité à l'encontre d'un dispositif de ressort (WSV_F) avec la pression de pré-commande (p_VS) et est en liaison fonctionnelle avec la soupape d'embrayage de convertisseur (WKV) de telle sorte que la pression d'entrée (p_WK_zu) de l'embrayage de pontage de convertisseur (2) dépasse le niveau de pression prédéfini (p_0) au plus tard à une valeur de pression de pré-commande (p_VS(p_0)) à laquelle la pression d'entrée (p_WD_zu) du convertisseur de couple (1) est inférieure au niveau de pression prédéfini (p_0).

18. Système de commande hydraulique selon la revendication 17, **caractérisé en ce qu'**une caractéristique de soupape (V_WKV) de la soupape d'embrayage de convertisseur (WKV), avant d'atteindre une valeur de pression prédéfinie (p_VS_9) de la pression de pré-commande (p_VS) est fonction d'un dispositif de ressort (WKV_F) agissant sur le tiroir de soupape (WKV_S) de la soupape d'embrayage de convertisseur (WKV) et de la pression de retour (p_WD_ab) du convertisseur de couple (1) agissant dans le même sens que le dispositif de ressort (WKV_F) sur le tiroir de soupape (WKV_S) de la soupape d'embrayage de convertisseur (WKV), ainsi que de la pression de pré-commande (p_VS) agissant dans la direction opposée sur le tiroir de soupape (WKV_S) de la soupape d'embrayage de convertisseur (WKV).

19. Système de commande hydraulique selon la revendication 18, **caractérisé en ce que** la caractéristique de soupape (V_WKV) de la soupape d'embrayage de convertisseur (WKV), à partir du dépassement de la valeur de pression prédéfinie (p_VS_7) de la pression de pré-commande (p_VS), est fonction de la pression de pré-commande (p_VS), d'un signal de pression (p_red) s'appliquant à la soupape de commutation de convertisseur (WSV) et commuté dans la direction de la soupape d'embrayage de convertisseur (WKV) et s'appliquant par rapport à la pression de pré-commande (p_VS) dans la même direction sur le tiroir de soupape (WKV_S) de la soupape d'embrayage de convertisseur (WKV), de la constante de ressort du dispositif de ressort (WKV_F) et de la pression d'entrée (p_WK_zu) de l'embrayage de pontage de convertisseur (2) agissant de manière identique au dispositif de ressort (WKV_F) sur le tiroir de soupape (WKV_S) de la soupape d'embrayage de convertisseur (WKV).

20. Système de commande hydraulique selon l'une quelconque des revendications 17 à 19, **caractérisé en ce qu'**une caractéristique de soupape (V_WDV) de la soupape de pression de convertisseur (WDV) est fonction de la pression de pré-commande (p_VS) s'appliquant sur le tiroir de soupape (WDV_S) de la soupape de pression de convertisseur (WDV) et d'une constante de ressort d'un dispositif de ressort (WDV_F) agissant à l'encontre de la pression de pré-commande (p_VS).

21. Système de commande hydraulique selon la revendication 19 ou 20, **caractérisé en ce que** le signal de pression (p_red) correspond à une valeur de pression de pré-commande (p-VS) ajustée de manière constante par le biais d'une soupape de réduction de pression ou à une pression de pré-commande (p_VS_sys) d'une autre soupape de commande de pression, qui est prévue pour commander une soupape de pression du système et donc pour ajuster la pression du système (p_sys).
